(19) Europäisches Patentamt
European Patent Office
Office européen des brevets

(11) EP 4 671 833 A1

(12) **EUROPEAN PATENT APPLICATION**

(43) Date of publication:
**31.12.2025 Bulletin 2026/01**

(21) Application number: **24306054.8**

(22) Date of filing: **28.06.2024**

(51) International Patent Classification (IPC):
***G02B 1/18*** *(2015.01)*

(52) Cooperative Patent Classification (CPC):
**G02B 1/18; G02B 1/115; G02B 5/285; G02B 27/0012**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Essilor International**
**94220 Charenton-Le-Pont (FR)**

(72) Inventors:
- **GUILLAIN, Frederic**
  **78400 CHATOU (FR)**
- **THEODEN, Alexis**
  **94220 CHARENTON-LE-PONT (FR)**
- **PIETTE, Alan**
  **94370 SUCY EN BRIE (FR)**
- **NICOLAS, Caroll**
  **77330 OZOIR LA FERRIERE (FR)**

(74) Representative: **Jacobacci Coralis Harle**
**32, rue de l'Arcade**
**75008 Paris (FR)**

(54) **COATED OPTICAL ARTICLE TO REDUCE VISUAL PERCEPTION OF OILY STAINS**

(57) The invention relates to an optical article comprising at least:
(a) a base element having a front main surface and a rear main surface,
(b) at least a multilayered interferential coating, defined as IF coating, deposited onto the front main surface and/or the rear main surface of said base element, said IF coating comprising at least two layers having a low refractive index which is lower than 1.55, defined as "LI layer", and at least two layers having a high refractive index which is equal to or higher than 1.55, defined as "HI layer", and
(c) an oleophilic outer layer, in contact with air, which has a thickness of 10 nm or less and has a contact angle with oleic acid lower than or equal to 40°, said oleophilic outer layer is adapted and/or configured to not amend the optical and colorimetric characteristics of said optical article,
characterized in that said optical article has a mean light reflection factor in the visible region when it is deprived from any greasy deposits, defined as $R_{v(clean)}$ and has a mean light reflection factor in the visible region when it is stained by any greasy deposits, defined as $R_{v(stained)}$, said greasy deposits forming onto the oleophilic outer layer an oily film having a thickness higher than or equal to 90 nm and having a refractive index in the range from 1.3 to 1.55, such as $\Delta Rv = |R_{v(clean)} - R_{v(stained)}| \leq 2\%$.

EP 4 671 833 A1

## Description

TECHNICAL FIELD OF THE INVENTION

The invention relates to an optical article comprising a base element, such as a substrate, having a front main face and a rear main surface, one at least of these two main surfaces being coated with an interferential multilayered coating. The interferential multilayered coating is specific and is able to and/or configured to be relatively soil-resistant so as to reduce for instance global fingerprint visibility. The optical article may especially be an ophthalmic lens, in particular a spectacle lens.

The invention also refers to a method for manufacturing such an optical article.

BACKGROUND INFORMATION AND PRIOR ART

An interferential coating is in particular used in the field of ophthalmic lenses, especially spectacle glasses. It usually consists of a multilayer comprising interferential thin layers, generally an alternation of layers based on a dielectric material, such as mineral oxides, of high refractive index and a dielectric material of low refractive index deposited for instance under vacuum.

An interferential coating may be either a reflective coating (also named mirror coating) or an antireflective coating.

Reflective coatings are usually designed so as to confer to the surface of an optical article they coat, a mean light reflection factor in the visible region Rv (front face OA) that is strictly higher than 2.5 % for an angle of incidence of 15°. Reflective coatings are generally applied to a surface of an optical article so as to provide a reduction in transmitted visible, ultra-violet or infrared light (i.e.: increase the light ray reflection). They may also impart a mirror and/or colored appearance to the optical article, which may be desirable for aesthetic purposes. Such a coating is used for example to provide solar spectacle lenses with a mirror effect.

On the contrary, when deposited on a transparent substrate, the function of an antireflective coating is to reduce its light reflection and therefore to increase its light transmission. A substrate thus coated will therefore have its transmitted light/reflected light ratio increased, thereby improving the visibility of objects placed behind it. When it is sought to achieve a maximum antireflection effect, it is then preferable to provide both faces (front and rear faces) of the substrate with this type of coating. This antireflective coating is usually used in the ophthalmic field. Accordingly, traditional antireflective coatings are designed and optimized to reduce reflection on the lens surface in the visible region, typically within the spectrum range of from 380 to 780 nm. In general, the mean light reflection factor in the visible region Rv on the front and/or rear faces of standard ophthalmic lens is between 1.5 to 2.5%.

Hence, these coatings have many benefits from the optical point of view, improving in particular the visual comfort of the wearer. However, they unfortunately suffer from being soil-sensitive, and especially to greasy deposits (i.e., smudges) such as those resulting from fingerprints.

Soil has two major effects, on the one hand it is harmful to the view perception of the wearer, in that it damages transmission of the transmitted light beams that are perceived by the wearer and, on the other hand, it creates aesthetically unpleasant effects, by locally modifying on the glass surface the intensity and the colour of the reflection such as perceived by a foreign observer.

For this reason, the ophthalmic glass latest generation most frequently comprises hydrophobic and/or oleophobic surface coatings, deposited on the non-reflecting coatings, that reduce surface energy thereof so as to prevent greasy soils to adhere, thereby making them easier to remove. Hydrophobic and/or oleophobic coatings are obtained by applying surface energy-reducing compounds onto the non-reflecting coating surface. Such compounds have been extensively described in the prior art, for example in the patents U.S. Pat. No. 4,410,563, EP 0,203,730, EP 749,021, EP 844,265, EP 933,377.

These coatings do satisfy many wearers. However, even if such treated interferential coatings are easier to clean, it often remains necessary in practice to use special, microfiber type, wiping clothes and/or to repeat many times a wiping step so as to recover optical properties nearly identical to those of the glass prior to being soiled.

Another solution proposed in the state of the art consists in trying to reduce the visibility of greasy deposits or smudges when they do appear.

The document US 4 070 097 proposes an ophthalmic anti-reflection coating for use on spectacles with lenses having an eye side and an outside consisting of a first coating disposed on the eye side of the lens and a second coating disposed on the outside of the lens. The first and second coatings are formed of a metal layer and a dielectric layer having a low index of refraction, such as magnesium fluoride or silicon dioxide. The metal layer can be formed of any suitable material such as nickel, chromium, Inconel and Nichrome (a material comprised of essentially nickel and chromium). Typically, the metal layers can have a thickness ranging from 10 to 40 Angstroms. In particular, the dielectric layer faces the wearer's eyes on both surfaces whereas the metal layer is on the outside of each coating facing away from the wearer's

eyes in both cases. Hence, this document is restricted to two-layer metal-dielectric anti-reflection coating, including very thin and therefore potentially difficult to obtain metallic layers, or not so thin and therefore potentially absorptive metallic layers (i.e. : may be fully not transparent),so is of limited application.

The document WO 00/31569 describes a coated lens including a lens element and a stain masking coating on a surface of the lens element. This masking coating comprises at least three layers of differing refractive index and includes at least a first adhesion layer, which is preferably a metallic, e.g., chromium layer, a low refractive index layer (such as a $SiO_2$ layer) and a high refractive index layer, such as $TiO_2/P_{r2}O_3$ or $TiO_2$ layer (see Table 4). Optionally, a secondary coating, which is able to provide a desirable optical and/or mechanical property to the optical article, may underlay the stain masking coating or be applied to a second surface of the lens element. This secondary coating may be one or more of an anti-reflective, abrasion resistant, or impact-resistant hydrophobic and adhesion coatings. An abrasion-resistant coating is preferred. The embodiments disclosed in this document all involve interferential coatings having a reflectance higher than 4% i.e., a mirror behaviour and are therefore also of limited application.

Hence, an object of the present invention is thus to propose a new optical article which avoids, at least in part, the aforementioned drawbacks.

Indeed, there is still a need to provide an optical article which is able to and/and configured to avoid visibility of greasy deposits, such as fingerprints for both the observer and the wearer of the optical article.

There is also a need to provide an optical article comprising an interferential coating that is relative soil-resistant, without substantially impairing the interferential stack performances, and this, even if the outermost layer of this interferential coating is stained by greasy deposits.

There is also a need to provide novel interferential coatings having further mechanical and thermal performances.

In addition, there is also a need for providing a method of preparing such an optical article.

## SUMMARY OF THE INVENTION

The Applicant sought to develop a new transparent optical article, preferably a lens and more preferably an ophthalmic lens for eyeglasses, comprising an organic or mineral base element bearing an interferential multilayered coating, said optical article having optical and colorimetric characteristics that do not substantially vary when it is stained by greasy deposits, such as greasy deposits (for instance fingerprints), while having preferably very good mechanical performances.

For that purpose, the Applicant developed a new structure for optical article comprising both an interferential multilayered coating coated with an oleophilic outer layer.

The invention relates to an optical article comprising at least:

(a) a base element having a front main surface and a rear main surface,

(b) at least a multilayered interferential coating, defined as IF coating, deposited onto the front main surface and/or the rear main surface of said base element, said IF coating comprising at least two layers having a low refractive index which is lower than 1.55, defined as "LI layer", and at least two layers having a high refractive index which is equal to or higher than 1.55, defined as "HI layer", and

(c) an oleophilic outer layer, in contact with air, which has a thickness of 10 nm or less and has a contact angle with oleic acid lower than or equal to 40°, said oleophilic outer layer is adapted and/or configured to not amend the optical and colorimetric characteristics of said optical article,

characterized in that said optical article has a mean light reflection factor in the visible region when it is deprived from any greasy deposits, defined as $R_{v(clean)}$ and has a mean light reflection factor in the visible region when it is, at least in part, stained by any greasy deposits, defined as $R_{v(stained)}$, said greasy deposits forming onto the oleophilic outer layer an oily film having a thickness higher than or equal to 90 nm and having a refractive index in the range from 1.3 to

$$1.55, \text{ such as } \Delta Rv = |R_{v(clean)} - R_{v(stained)}| \leq 2\%,$$

wherein the refractive indexes being expressed at 25°C at a wavelength of 550 nm,
and wherein the mean light reflection factors in the visible region $R_v$ are defined in the ISO 13666:1998 Standard and are measured in accordance with the ISO 8980-4 for an angle of incidence of 15°.

Indeed, thanks to the characteristics of the optical article, especially the specific combination of an interferential coating coated with an oleophilic layer, the Applicant has found that it is possible to get an optical article having optical characteristics, especially at least reflective characteristics, which are not, or not very, affected by soils, especially by

fingerprints. Therefore, despite the presence of soils/greasy deposits onto the outer main face of the optical substrate (coated with both the multilayered interferential coating and the oleophilic layer), at least the optical characteristics, such as its reflective or its antireflective properties, are not negatively affected.

Without being bound by any theories, it seems that the oleophilic layer would allow the filmification of oily deposits, such as fingerprints and then would reduce its diffusion that would trigger disturbance, while the specific design of the multilayered interferential coating would reduce the visibility of the oily deposits, at least in reflection for observers.

The invention also relates to a method of designing an optical article as defined above, defined as "the final optical article" comprising at least the following successive steps:

(i) defining a starting optical article comprising at least:

(a) optionally a base element having a front main surface and a rear main surface such as defined above,
(b) a starting multilayered interferential coating, defined as starting IF coating, intended to be deposited onto the front main surface and/or the rear main surface of said base element, said IF coating comprising:

a predetermined number of LI and HI layers, said predetermined number of HI and LI layers comprising at least two LI layers and at least two HI layers,
a predetermined material for each HI layer and each LI layer;
a predetermined thickness range between a minimum thickness and a maximum thickness for each HI layer and each LI layer; and

(c) optionnally the oleophilic outer layer such as defined above;

(ii) defining target optical and preferably color characteristics comprising the mean reflection factor in the visible region Rv and optionally one or more of the following characteristics: the mean reflection factor in the UV region, Ruv, the transmission, the hue, the Chroma, between a clean state wherein the starting optical article is deprived from any greasy deposits and a stained state wherein the starting optical article is stained by any greasy deposits, said greasy deposits forming onto the oleophilic outer layer, an oily film corresponding to an oily layer having a thickness of 150 nm and having a refractive index of 1.45 at 550nm, the mean light reflection factor in the visible region in the clean state is defined as $R_{v(clean)}$ and the mean light reflection factor in the visible region in the stained state is defined as $R_{v(stained)}$ ;
(iii) performing an optimization procedure by varying the thickness of the HI layers and the LI layers of the starting optical article so as to reduce the reflection change "$\Delta$Rv" between the clean state and the stained state and to obtain the final optical article having $\Delta Rv = |R_{v(clean)}- R_{v(stained)}| \leq 2\%$, and optionally so as to reduce one or more of the following changes: the mean reflection factor in the visible region UV change "$\Delta R_{uv}$", between the clean state and the stained state and to obtain the final optical article having, such as $\Delta R_{uv} = |R_{uv(clean)}- R_{uv(stained)}| \leq 7\%$, the transmission change ""$\Delta T_v$" between the clean state and the stained state, and to obtain the final optical article having $\Delta Tv = |T_{v(clean)}-T_{v(stained)}| \leq 2\%$, %, the chroma change "$\Delta C^*$" between the clean state and the stained state, and to obtain the final optical article having such as $\Delta C^* = | C^*_{(clean)}-C^*_{(stained)}| \leq 5$ and the hue change "$\Delta h$" between the clean state and the stained state and to obtain the final optical article having such as $\Delta h = |h_{(clean)} - h_{(stained)}| \leq 45°$.

## BRIEF DESCRIPTION OF THE DRAWING

For a more complete understanding of the description provided herein and the advantages thereof, reference is now made to the brief description below, taken in connection with the accompanying drawing and detailed description, wherein like reference numerals represent like parts.

FIG. 1 is a schematic section view of an optical article according to an embodiment of the invention.

## DETAILED DESCRIPTION OF THE INVENTION

### A) Definitions

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are openended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing

only those one or more steps or elements.

Unless otherwise indicated, all numbers or expressions referring to quantities of ingredients, ranges, reaction conditions, etc. used herein are to be understood as modified in all instances by the term "about."

Also, unless otherwise indicated, the indication of an interval of values « from X to Y » or "between X to Y", according to the present invention, means as including the values of X and Y.

We mean an ophthalmic article defined by, but not exclusive of corrective lenses, non-corrective lenses, contact lenses, intra-ocular lenses, magnifying lenses, protective lenses, and visors containing photochromic compounds within a coating, the lens material, a film, or any adjacent layer.

As used herein, "a base element" can consist in an optical, such as an ophthalmic, substrate or in a support film of optical quality to be fixed on an optical/ophthalmic substrate thanks to an adhesive such as a pressure-sensitive adhesive of optical quality (PSA layer) (i.e.: laminate).

As used herein, "interferential coating" means a coating, generally composed of interferential thin layers and comprises at least one layer having a low refractive index which is lower than 1.55, defined as "LI layer", and at least one layer having a high refractive index which is equal to or higher than 1.55, defined as "HI layer.

In the present application, when an optical lens comprises one or more coatings onto the surface thereof, the expression "to deposit a layer, a sheet or a coating onto the article" is intended to mean that a layer, a sheet or a coating is deposited onto the external (exposed) surface of the outer coating of the article, that is to say its coating that is the most distant from the substrate.

Unless otherwise indicated, a coating, a layer or a sheet, that is said to be "on" a substrate/base element or deposited "onto" a substrate/base element" is defined as a coating, a layer or a sheet, which (i) is positioned above the substrate/base element, (ii) is not necessarily in contact with the substrate/base element, that is to say one or more intermediate coatings/sheets may be arranged between the substrate/base element and the coating or sheet in question, and (iii) does not necessarily completely cover the substrate/base element.

In a preferred embodiment, the coating on a substrate/base element or deposited onto a substrate/base element is in direct contact with this substrate.

When "a layer/sheet 1 is lying under a layer 2/sheet 2", it is intended to mean that layer/sheet 2 is more distant from the substrate than layer 1/sheet 1 respectively.

By outermost layer or sheet of the interferential coating, it is meant the layer or sheet of the interferential coating which is the furthest from the substrate.

By innermost layer or sheet of the interferential coating, it is meant the layer or sheet of the interferential coating which is the closest to the substrate.

By inner layer/sheet of the interferential coating, it is meant any layer/sheet of the interferential coating except for the outermost layer/sheet of said interferential coating.

Also, unless stated otherwise, all thicknesses disclosed in the present application relate to physical thicknesses.

As used herein, a layer of the interferential coating is defined as having a thickness higher than or equal to 1 nm. Thus, any layer having a thickness lower than 1 nm will not be considered when counting the number of layers in the reflective coating. A sub-layer (having generally a physical thickness of 150 nm) is also not considered when counting the number of layers of the interferential coating.

Unless otherwise specified, the refractive indexes referred to in the present application are expressed at 25 °C at a wavelength of 550 nm.

As used herein, the rear (or the inner or Concave or CC) face of the base element/substrate is intended to mean the face which, when using the article, is the nearest from the wearer's eye. It is generally a concave face. On the contrary, the front face of the substrate/base element (or Convex or CX), is the face which, when using the article, is the most distant from the wearer's eye. It is generally a convex face.

Also, as used herein, a "transparent substrate/base element" is understood to be transparent, when the observation of an image through said substrate is perceived with no significant loss of contrast, that is, when the formation of an image through said substrate is obtained without adversely affecting the quality of the image.

The colorimetric coefficients of the optical article of the invention in the international colorimetric system CIE L*a*b* (1976) (such as the Chroma C* and the hue "h") are calculated between 380 and 780 nm, taking the standard illuminant D 65 and the observer into account (angle of 10°). The observer is a "standard observer" as defined in the international colorimetric system CIE L*a*b*. Indeed, in the CIE L*a*b* space, it is possible to express not only overall variations in color, but also in relation to one or more of the parameters L*, a* and b*. This can be used to define new parameters and to relate them to the attributes of the visual sensation. Clarity, related to luminosity, is directly represented by the value of L*. Chroma: $C^* = (a^{*2} + b^{*2})^{1/2}$ defines the chromaticness. The angle of hue: h = tg-1 (b*/a*) (expressed in degrees); related to hue.

According to the invention, the colorimetric measurements (in reflection) of the at least one face coated with the interferential multilayered coating of the invention : reflection factors Rv, hue angle h, and chroma C* in the international colorimetric CIE (L*, a*, b*) space were carried out with a Zeiss spectrophotometer, taking into account the standard

illuminant D65, and the standard observer 10° (for h and C*). They are provided for an angle of incidence of 15° or 35°

According to the invention, the "angle of incidence (symbol $\theta$)" is the angle formed by a ray light incident on an ophthalmic lens surface and a normal to the surface at the point of incidence. The ray light is for instance an illuminant light source, such as the standard illuminant D65 as defined in the international colorimetric CIE L*a*b* (1976). Generally, the angle of incidence changes from 0° (normal incidence) to 90° (grazing incidence). The usual range for angle of incidence is from 0° to 75° and is typically 15° for the present invention.

The optical characteristics comprise at least the mean light reflection factor in the visible region $R_v$, also named the "luminous reflectance".

Herein, the "luminous reflectance" noted $R_v$, is such as defined in the ISO 13666:1998 Standard, and measured in accordance with the ISO 8980-4, i.e., this is the weighted spectral reflection average over the whole visible spectrum between 380 and 780 nm. $R_v$ is usually measured for an angle of incidence lower than 17°, typically of 15°, but can be evaluated for any angle of incidence.

According to the invention, when the mean light reflection factor in the visible region Rv onto the front and/or rear main face of the optical article is strictly higher than 2.5%, more preferably higher than 3%, even more preferably higher than 5%, this means that the multilayered interferential coating is able to provide a mirror behaviour onto the front or rear main surface of the optical article respectively. Especially, a "mirror behaviour" enables to provide a reduction in transmitted visible, ultra-violet and/or infrared light. In other words, an optical article having on its front main face a mirror behaviour reflects at least a part of light arriving on said surface. Said mirror behaviour increases light reflection at the article/air interface over a determined portion of the spectrum. Reflection may be in the ultraviolet spectrum or in the visible spectrum or in the infrared spectrum.

According to the invention, when the mean light reflection factor in the visible region Rv onto the front and/or rear main face of the optical article is equal to or lower than 2.5%, this means that the multilayered interferential coating is able to provide an antireflective behaviour onto the front and/or rear main surface of the optical article respectively.

As used herein, the factor $T_v$ should be understood as defined by the international normalized definition (ISO 13666:1998 Standard) and is measured in accordance with the ISO 8980-3 Standard. It is defined in the wavelength range of from 380 to 780 nm.

The optical characteristics may also comprise at least a mean reflection factor in the UV bands: UVA band ranges from 315 to 380nm and/or the UVB band ranges from 280 to 315 nm. These UVA and UVB bands are indeed particularly harmful to the retina. The mean reflection in the UVA and UVB regions may thus attain high levels (up to 60%) for traditional antireflective lenses.

According to the invention, a mean reflection factor Ruv is defined through the following relation:

$$R_{UV} = \frac{\int_{280}^{380} W(\lambda).R(\lambda).d\lambda}{\int_{280}^{380} W(\lambda).d\lambda}$$

wherein R($\lambda$) represents the optical article spectral reflection factor at a given wavelength, and W($\lambda$) represents a weighting function equal to the product of the solar spectrum irradiance Es($\lambda$) and the efficiency relative spectral function S($\lambda$).

The spectral function W($\lambda$), enabling to calculate the ultraviolet radiation transmission factors, is defined according to the ISO 13666:1998 standard. It makes it possible to express the ultraviolet solar radiation distribution tempered by the relative spectral efficiency of such radiation for a user, since it simultaneously takes both the solar spectral energy Es($\lambda$) into account, which does globally emit less UVB-rays as compared to UVA-rays, and the spectral efficiency S($\lambda$), UVB-rays being more harmful than UVA-rays. The values for those three functions in the ultraviolet region are given in the table disclosed in ISO 13666:1998 standard (which is reproduced at page 6 of the publication WO 2012/076714).

The mean reflection factor Ruv is measured in the present application at an angle of incidence of 35°.

Let us denote a first color difference, noted $\Delta E^*_{ab}$ which is measured as follows:

$$\Delta E^*_{ab} = \sqrt{\left(L^*_{stained} - L^*_{clean}\right)^2 + \left(a^*_{stained} - a^*_{clean}\right)^2 + \left(b^*_{stained} - b^*_{clean}\right)^2}$$

werein

$L^*_{clean}$, $a^*_{clean}$, $b^*_{clean}$ are the theoretical values of L*, a*, b* of the optical article when it is deprived from the greasy deposits;

$L^*_{stained}$, $a^*_{stained}$, $b^*_{stained}$ are the theoretical values of L*, a*, b* of the optical article when it is stained from the greasy deposits,
said L*, a* and b* values being defined according to the international colorimetric CIE L*a*b* for an incident angle of 15°, taking the standard illuminant D65 into account.

Also let us denote a second color difference, noted $\Delta H^*_{ab}$ corresponding to:

$$\Delta H_{ab} = \sqrt{\left(a^*_{stained} - a^*_{clean}\right)^2 + \left(b^*_{stained} - b^*_{clean}\right)^2 - \left(C^*_{stained} - C^*_{clean}\right)^2}$$

$C^*_{clean}$, $a^*_{clean}$, $b^*_{clean}$ are the theoretical values of C*, a*, b* of the optical article when it is deprived from the greasy deposits;
$C^*_{stained}$, $a^*_{stained}$, $b^*_{stained}$ are the theoretical values of L*, a*, b* of the optical article when it is stained from the greasy deposits,
said L*, a* and b* values being defined according to the international colorimetric CIE L*a*b* for an incident angle of 15°, taking the standard illuminant D65 into account.

As used herein, "greasy deposits" means for instance stains from fingerprints, facial oils or sebum that are usually left by the wearer of the optical article. Indeed, a person naturally produces sebum (from the sebaceous gland) and other oils from the face and fingertips and can deposit them on the outer surface of an optical article, such as an ophthalmic lens. These greasy deposits can reduce the quality of the visual perception for the wearer and contribute (with dirt, dust, etc.) to reduced aesthetic appearance of the optical article. According to the invention, these greasy deposits have been reproduced in the experimental part below by an oily layer having a thickness of 150 nm intended to simulate sweat of a human, and which corresponds to the usual composition and thickness of a fingerprint and has a refractive index in the range from 1.3 to 1.55, more preferably 1.45. Especially, in the experimental part, the oily layer corresponds to the sample 3 described in the publication issued from Optics & Laser Technology 34 (2002) 125-128, Elsevier "Refractive index of standard oils as a function of wavelength and temperature" and has the same refractive index as function of the wavelength (0.3 to 0.8 $\mu$m) as shown on Fig.1 of this publication.

**B) Optical article according to the invention**

As mentioned-above, the Applicant has developed a transparent optical article, especially an ophthalmic lens such as spectacle lens, comprising a base element, such as a substrate in mineral or organic glass comprising at least an interferential multilayered coating, which is able to and/or configured to avoid visibility of greasy deposits such as fingerprints, for both the wearer and the observer, and to do so without compromising not only the mechanical performances of the optical article, its cosmetic appearance, but also the economic and/or industrial feasibility of its manufacture.

The optical article is such as defined in the set of claims and comprises at least:

(a) a base element having a front main surface and a rear main surface,
(b) at least a multilayered interferential coating, defined as IF coating, deposited onto the front main surface and/or the rear main surface of said base element, said IF coating comprising at least two layers having a low refractive index which is lower than 1.55, defined as "LI layer", and at least two layers having a high refractive index which is equal to or higher than 1.55, defined as "HI layer", and
(c) an oleophilic outer layer, in contact with air, which has a thickness of 10 nm or less and has a contact angle with oleic acid lower than or equal to 40°, said oleophilic outer layer is adapted and/or configured to not amend the optical and colorimetric characteristics of said optical article,

characterized in that said optical article has a mean light reflection factor in the visible region when it is deprived from any greasy deposits, defined as Rv(clean) and has a mean light reflection factor in the visible region when it is stained by any greasy deposits, defined as Rv(stained), said greasy deposits forming onto the oleophilic outer layer an oily film having a thickness higher than or equal to 90 nm and having a refractive index in the range from 1.3 to 1.55, such as $\Delta Rv = |Rv(clean) - R_{v(stained)}| \leq 2\%$.

The structure of the base element (a) will be described hereafter.

### B.1 The base element/substrate

As mentioned above, the optical article comprises a base element having a front main surface and a rear main surface and at least one interferential multilayered coating deposited onto the front main surface and/or the rear main surface of said base element.

According to one embodiment, this base element can be a laminate, that is to say a support film of optical quality to be fixed on an optical/ophthalmic substrate thanks to an adhesive such as a pressure-sensitive adhesive of optical quality (PSA layer). Preferably, the support film is made of cellulose triacetate (TAC) and has a thickness of at least 40 microns, preferably a thickness in the range of 40 $\mu$m to 300 $\mu$m inclusive and preferably a thickness of 80 to 190 $\mu$m. Materials of the support film may be selected from the group of films made of cellulose triacetate (TAC), cellulose acetate butyrate (CAB), polycarbonate (PC), poly(ethylene terephthalate) (PET), poly(methylmethacrylate) (PMMA), urethane polymer (TPU), cyclo olefin copolymer (COC), polyester copoblock amide (like Pebax) and Polyimides.

According to another embodiment (described hereafter), the base element can consist in an ophthalmic substrate of a transparent optical article, such as a lens or lens blank, and more preferably an ophthalmic lens or lens blank.

Generally speaking, the interferential coating of the optical article according to the invention may be deposited onto any substrate, and preferably onto organic lens substrates, for example a thermoplastic or thermosetting plastic material.

Thermoplastic may be selected from, for instance: polyamides; polyimide; polysulfones; polycarbonates and copolymers thereof; poly(ethylene terephthalate) and polymethylmethacrylate (PMMA).

Thermoset materials may be selected from, for instance: cycloolefin copolymers such as ethylene/norbornene or ethylene/cyclopentadiene copolymers ; homo- and copolymers of allyl carbonates of linear or branched aliphatic or aromatic polyols, such as homopolymers of diethylene glycol bis(allyl carbonate) (CR 39®) ; homo- and copolymers of (meth)acrylic acid and esters thereof, which may be derived from bisphenol A ; polymer and copolymer of thio(meth)acrylic acid and esters thereof, polymer and copolymer of allyl esters which may be derived from Bisphenol A or phthalic acids and allyl aromatics such as styrene, polymer and copolymer of urethane and thiourethane, polymer and copolymer of epoxy, and polymer and copolymer of sulphide, disulfide and episulfide, and combinations thereof.

As used herein, a (co)polymer is intended to mean a copolymer or a polymer. As used herein, a (meth)acrylate is intended to mean an acrylate or a methacrylate. As used herein, a polycarbonate (PC) is intended to mean either homopolycarbonates or copolycarbonates and block copolycarbonates.

Homopolymers of diethylene glycol bis(allyl carbonate) (CR 39®), allylic and (meth)acrylic copolymers, having a refractive index between 1.54 and 1.58, polymer and copolymer of thiourethane, polycarbonates are preferred.

In particular, the base element recommended for the invention is a substrate selected from materials obtained by (co)polymerization of di(ethylene glycol) bis(allyl carbonate) and may correspond to the CR-39® ESSILOR ORMA® lenses.

As it will be shown hereafter, the substrate/base element may be coated with one or more functional coatings prior to depositing the antireflective coating of the invention. These functional coatings traditionally used in optics may be, without limitation, an impact-resistant primer layer, an abrasion-resistant coating and/or a scratch-resistant coating, a polarizing coating, a photochromic coating or a tinted coating. In the following a substrate means either a bare substrate or such a coated substrate.

Preferably, the substrate/base element and the optional abrasion-resistant coating and/or a scratch-resistant coating generally coated onto said substrate have a similar/close refractive index so as to avoid fringes or cosmetic defects.

Prior to depositing the interferential coating, the surface of said substrate is usually submitted to a physical or chemical surface activating treatment, so as to reinforce the adhesion of the antireflective coating. Such pre-treatment is generally conducted under vacuum. It may be a bombardment with energetic and/or reactive species, for example with an ion beam ("Ion PreCleaning" or "IPC") or with an electron beam, a corona discharge treatment, an ion spallation treatment, an ultraviolet treatment or a plasma-mediated treatment under vacuum, generally using an oxygen or an argon plasma. It may also be an acid or basic treatment and/or a solvent-based treatment (water, hydrogen peroxide or any organic solvent).

### B.2 The multilayered interferential coating and the oleophilic outer layer

As previously mentioned, both mirror and anti-reflection coatings are in general multilayer structures that achieve their optical properties by means of thin film interference effects. However, when stained by greasy deposits, e.g., by facial oils or fingerprints, the stain on the surface of the lens is highly visible, as it contrasts greatly with adjacent clean areas of the lens. Because of this high visibility, the lens is perceived to be difficult to clean and to keep clean.

According to the invention, the optical article according to the invention has been designed to be soil-resistant and to avoid visibility of greasy deposits as a wearer and as an observer.

*Oleophilic outer layer*

For that purpose and as previously mentioned, the optical article according to the invention comprises first an oleophilic outer layer which is transparent. The Applicant has surprisingly discovered that this oleophilic layer enables to reduce the diffusion of a greasy deposits, such as fingerprints and then their visibility for the wearer. Indeed, the Applicant has found that this oleophilic outer layer causes oils to be invisible, or nearly invisible, by leading the oils, e.g., from fingerprints, to spread along the outer surface of the optical article.

This oleophilic outer layer is the outermost layer of the optical article, that is to say this oleophilic outer layer is in contact with air (and is not intended to be coated with any other functional coatings).

This oleophilic outer layer is adapted and/or configured to not amend the optical and colorimetric characteristics of said optical article.

To this end, the oleophilic outer layer has first a thin thickness. Indeed, the thickness of the oleophilic outer layer is lower than or equal to 20 nm, more preferably lower or equal to 15 nm, even more preferably lower or equal to 10 nm. As used herein, a "thickness lower than or equal to 20 nm" includes the following values and/or any intervals comprised between these values (nm): 20; 19.5; 19; 18.5; 18; 17.5; 17; 16.5; 16; 15.5; 15; 14.5; 14; 13.5; 13; 12.5; 12; 11.5; 11; 11; 10.5; 10; 9.5; 9; 8.5; 8; 7.5; 7; 6.5; 6; 5.5; 5; 4.5; 4; 3.5; 3; 2.5; 2.0; 1.5, etc.

It moreover allows, when a fingerprint is deposited on it, and then not cleaned, or on the contrary cleaned by wiping, to form a continuous film of oil instead of oil bead, so that light passes through (in transmission) making it appears for the wearer so that there are no fingerprints. The fingerprints are still present, the wearer just cannot see them (at least not without scrutinizing the surface). However, in reflection without the specific multilayered interferential coating according to the invention, it will result in color change of the optical article between the clean and soiled area. In addition, the Applicant has found that the oleophilic layer is not disturbing the optical performance of the interferential system since it is quite thin and the impact can be neglected or avoid.

Generally, the oleophilic outer layer has a refractive index at 25° C and at 550 nm or 630 nm which varies from 1.30 to 1.60. As used herein, a "refractive index which varies from 1.30 to 1.60" includes the following values and/or any intervals comprised between these values: 1.30; 1.31; 1.32; 1.33; 1.34; 1.35; 1.36; 1.37; 1.38; 1.39; 1.40; 1.41; 1.42; 1.43; 1.44; 1.45; 1.46; 1.47; 1.48; 1.49; 1.50; 1.51; 1.52; 1.53; 1.54; 1.55; 1.56; 1.57; 1.58; 1.59; etc.

This outer layer has oleophilic properties. Especially, it has a contact angle with oleic acid which is lower than or equal to 40°. As used herein, a "a contact angle with oleic acid which is lower than or equal to 40°" includes the following values and/or any intervals comprised between these values (in °): 40; 39; 38; 37; 36; 35; 34; 33; 32; 31; 30; 29; 28; 27; 26; 25; 24; 23; 22; 21; 20; 19; 18; 17; 16; 15; 14; 13; 12; 11; 10; 9; 8; 7; 6; 5; 4; 3; etc.

According to the invention, the contact angle measurements, especially with oleic acid, are static contact angle measurements and have been performed by means of the DIGIDROP apparatus marketed by GBX. It makes it possible to evaluate a contact angle starting from a picture taken at a given moment (3000 ms) after deposition of a droplet of oleic acid.

In addition, the oleophilic outer layer may be also characterized by a surface energy. In general, the oleophilic outer layer will be selected with the lowest surface energy as possible, while keeping the oleophilic properties as previously described. In general, the surface energy is lower than or equal to 60 mJ/m$^2$, preferably is lower than or equal to 50 mJ/m$^2$, in particular is lower than or equal to 40 mJ/m$^2$ and typically is lower than or equal to 30 mJ/m$^2$. Especially, the surface energy may be higher than or equal to 20 mJ/m$^2$, preferably may be higher than or equal to 25 mJ/m$^2$. According to the invention, a "surface energy which is lower than or equal to 60 mJ/m$^2$" and preferably higher than 20 mJ/m$^2$ includes the following values and/or any intervals comprised between these values (in mJ/m$^2$): 60; 59; 58; 57; 56; 55; 54; 53; 52; 51; 50; 49; 48; 47; 46; 45; 44; 43; 42; 41; 40; 39; 38; 37; 36; 35; 34; 33; 32; 31; 30; 29; 28; 27; 26; 25; 24; 23; 22; 21; 20.

The surface energy may be determined according to the OWENS-WENDT method using a Krüss DSA analyser and described in the following reference: "Estimation of the surface force energy of polymers" Owens D. K., Wendt R. G. (1969) J. APPL. POLYM.SCI, 13, 1741-1747.

To form the ultrafine oleophilic outer layer having preferably a low-surface energy, any type of material or combination of materials can be used that produces the required oleophilic and optional surface energy properties.

Suitable examples include silicon and fluorine-containing DLC layers. Such layers are described for example in the article entitled "M. Grishke (1998) Diamond and related materials, 7, 454-458".

These layers are produced using plasma methods based on, (as an example) HMDSO (hexamethyidisiloxane) or TMS (trimethyl silane) for silicated films and on $CF_4$ for fluorinated layers.

A DLC material is a material especially suitable for implementing the present invention.

DLC materials have been extensively described in the literature and may be defined as an amorphous carbon metastable form comprising a significant fraction of sp$^3$ C-C bonds. There can be materials comprising only carbon or hydrogenated alloys referred to as a-C:H.

DLC layer properties as well as methods for producing the same are described especially in the article entitled "Diamond-like amorphous carbon"; J. Robertson; Materials science and engineering R37 (2002) 129-181.

Preferably, the DLC material comprises a a-C:H material.

Layers made of such material are relatively hydrophobic (contact angle with water=82°) and highly oleophilic (contact angle avec oleic acid=12°).

This type of material may be defined as $sp^2$ hybridized carbon clusters, most of them being aromatic in nature, distributed throughout a matrix having $sp^3$ hybridized carbon-carbon bonds, that are more or less hydrogenated.

The a-C:H material-containing layer is deposited by means of a plasma-enhanced chemical vapour deposition. The plasma-enhanced chemical vapour deposition method (traditionally referred to as PECVD) consists by applying a voltage in producing a condensation reaction on the sample surface between a reactive gas and such surface, the reactive gas being partly ionized in the form of a plasma. Plasma is produced by ionizing at least partly a gas comprising a hydrocarbon, such as $CH_4$, $C_2H_2$, $C_2H_4$ and $C_6H_6$, preferably methane $CH_4$. During such ionization process, in the case of methane, $CH_3$+, $C_2H_5$+, H+ ions are produced that will bombard the substrate. The plasma also comprises $CH_3$., $C_2H_5$., H radicals. During the deposition process of said layer, the substrate is in contact with a cathode coupled to a radio frequency generator. Self-bias voltage applied between the electrode bearing the substrate (cathode) and the plasma represents an important parameter for defining the structural state of the resulted DLC films, and in particular a-C:H ones. Generally speaking, the hydrogen concentration decreases as the self-bias voltage applied to the cathode increases as expressed in absolute value. With a zero self-bias voltage, the a-C:H material $sp^2$ areas of the deposited layer are small in size and dispersed into this highly hydrogenated $sp^3$ matrix. The mechanical properties of such layer look like those of a polymer and are relatively poor. Near to a self-bias voltage of 150 volts, as expressed in absolute value, the sp3 matrix becomes less hydrogenated and a maximal sp3 carbon-carbon hybridization is obtained, as well as good mechanical properties. With high self-bias voltages of about 400 volts as expressed in absolute value, the graphitic cluster size increases, the layer becoming more absorbent and less hard. The a-C:H material used in the frame of the present invention comprises generally a hydrogen atom atomic percentage ranging from 30 to 55%, and more preferably greater than 43%. These a-C:H materials are deposited by generally imposing to the cathode a self-bias voltage ranging from 0 to -400 volts, preferably from 0 to -150 volts, and more preferably from -10 to -50 volts. During the deposition process, gas pressure generally varies from 10-2 mbars to 10-1 mbars.

According to another embodiment, the oleophilic outer layer may correspond to an organosilane such as described in the document EP 3 255 108 filed by NBD nanotechnologies, Inc.

It can include a hydrophobic coating comprising at least one alkyl backbone monolayer and hydroxyl-polyhedral oligomeric silsesquioxane (OH-POSS) nanoparticles. Preferably, the alkyl backbone monolayer comprises alkylsilane (AS).

Especially, it can be the reaction product of:

a) an PH-POSS of the formula

$$H_3C\text{-}(CH_2)_n\text{-}Si(X)_{3\text{-}p}(R)_p \qquad \text{(Formula 1)}$$

in which n=0 to 15; typically, n=3 to 5; p=0, 1, or 2; typically, p=0; R is an alkyl group or a hydrogen atom; and, X is a hydrolysable group, such as, but not limited to, a halide group or an alkoxy group;

b) an alkylsilane (AS) of formula $(SiEtOH)_3(CH_2)_8Cl$;

c) hydroxyl terminated polyhedral oligomeric silsesquioxane (PH-POSS); and

d) either at least one aqueous acid or at least one aqueous base.

In particular, the PH-POSS may have the following structure (II):

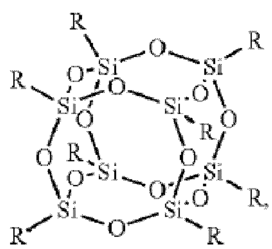

(II)

According to another embodiment, the oleophilic outer layer may correspond to an alkylsilane.

A preferred oleophilic outer layer may comprise an alkylsilane and may correspond to the product sold under the reference KY1604(100) provided by the company Shin Etsu and/or to the composition described in the document

WO2020/026729 incorporated by reference therein.

For instance, the oleophilic outer layer may correspond to an organosilane compound represented by the following general formula (III):

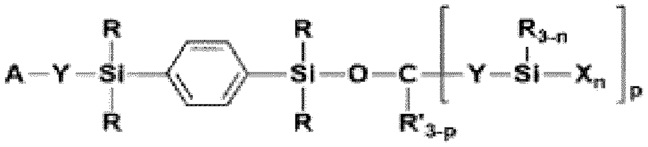

(III)

wherein A may be -C (= O) $OR^1$, -C(=O)$NR^1_2$, -C(=O)$SR^1$ and-P (= O) $(OR^1)_2$, $R^1$ may be an hydrogen atom, an alkyl with 1-30 carbon atoms, an aryl with 6-30 carbon atoms or an aralkyl with 7-30 carbon atoms, Y is independently an organic group with 2 valence, R is independently an alkyl with 1-4 carbon atoms or a phenyl, R' is an alkyl with 1-20 carbon atoms, an aryl with 6-20 carbon atoms or an aralkyl with 7-20 carbon atoms, p is 2 or 3, X is hydroxyl or hydrolytic group independently, and n is an integer of 1-3.

Another preferred example of oleophilic outer layer may comprise a compound with the following formula: 11-[10-(2-methoxyethoxy)decyloxy]undecyltrimethoxysilane. Such product is sold by the company JSI Silicon.

*The interferential coating (IF coating*

Then, the Applicant has found that even if, the oleophilic layer enables to reduce the diffusion of a greasy deposits, such as fingerprints and then their visibility for the wearer; the counterpart is that the visibility can be more important for the observers due to the modification of the interferential system.

Therefore, an adapted interferential coating has been designed by the Applicant so as to reduce the visibility of the greasy deposits in reflexion for the observers.

According to the invention, the IF coating presents a specific stack of:

- at least two layers having a low refractive index which is lower than 1.55, defined as "LI layer",
- at least two layers having a high refractive index which is equal to or higher than 1.55, defined as "HI layer".

Especially, the interferential coating according to the invention has been designed to improve the optical, especially the reflection, and preferably the colorimetric characteristics of the optical article so that they do not change between a "clean state" wherein the optical article is deprived from any greasy deposits and a "stained state" wherein the oleophilic outer layer is stained by at least one greasy deposit.

Hence, according to the invention, for an angle of incidence of 15°, the optical article has a mean light reflection factor in the visible region in the clean state defined as $Rv_{(clean)}$ and has a mean light reflection factor in the visible region in the stained state, defined as $R_{v(stained)}$, the greasy deposits forming onto the oleophilic outer layer an oily film having a thickness higher than or equal to 90 nm and having a refractive index in the range from 1.3 to 1.55, such as $\Delta Rv = |R_{v(clean)}-R_{v(stained)}| \leq 2\%$.

Preferably, $\Delta R_v \leq 1\%$, in particular $\leq 0.9\%$, preferably $\leq 0.8\%$ and typically $\leq 0.5\%$.

As used herein, "a $\Delta Rv = |R_{v(clean)-} R_{v(stained)}| \leq 2\%$" includes the following values and/or any intervals comprised between these values (in %): 2; 1.9; 1.8; 1.7; 1.6; 1.5; 1.4; 1.3; 1.2; 1.1; 1.0; 0.9; 0.8; 0.7; 0.6; 0.5; 0.4; 0.3; 0.2; 0.1; 0.0.

According to an embodiment, for an angle of incidence of 15°, the IF coating can have antireflective characteristics in the visible region in both states. According to this embodiment, $Rv_{(clean)}$ and $Rv_{(stained)}$ are lower than or equal to 2.5%, preferably lower than or equal to 2.0%, in particular lower than or equal to 1.5% and typically lower than or equal to 1.0%. As used herein, "a mean light reflection factor in the visible region, Rv, ≤ 2.5 %" includes the following values and/or any intervals comprised between these values (%): 2.5; 2.4; 2.3; 2.2; 2.1; 2.0; 1.9; 1.8; 1.7; 1.6; 1.5; 1.4; 1.3; 1.2; 1.1; 1.0; 0.9; 0.8; 0.7; 0.6; 0.5; 0.4; 0.3; 0.2; etc.

According to another embodiment, for an angle of incidence of 15°, the IF coating can have reflective characteristics, also named mirror characteristics, in the visible region. According to this embodiment, $Rv_{(clean)}$ and $R_{v(stained)}$, are higher than 2.5%, preferably higher than or equal to 2.8%, in particular higher than or equal to 3.0% and typically lower than or equal to 3.5%. As used herein, " a mean light reflection factor in the visible region, Rv, > 2.5 %" includes the following values and/or any intervals comprised between these values (%): 2.6; 2.7; 2.8; 2.9; 3.0; 3.1; 3.2; 3.3; 3.4; 3.5; 4.0; 4.5; 5.0; 5.0; 5.5; 6.0; 6.5; 7.0; 7.5; 8.0; 8.5; 9.0; 9.5; 10.0; 3.5; 4.0; 4.5; 5.0; 5.0; 5.5; 6.0; 6.5; 7.0; 7.5; 8.0; 8.5; 9.0; 9.5; 10.0; 10.5; 11.0; 11.0; 11.5; 12.0; 12.5; 13.0; 13.5; 14.0; 14.5; 15.0; etc.

In addition, the IF coating according to the invention has been designed to minimize the reflection towards the eye of the ultraviolet radiation having an angle of incidence on the lenses especially ranging from 30 to 45°, such as 35° and this, in both states: clean state and stained state.

Hence, especially, the optical article has, for an angle of incidence of 35°, a mean reflection factor in the UV region in the clean state, defined as $R_{uv(clean)}$ and has a mean reflection factor in the UV region in the stained state, defined as $R_{uv(stained)}$, such as $\Delta R_{uv} = |R_{uv(clean)} - R_{uv(stained)}| \leq 7\%$, in particular ≤ 6% and typically ≤ 2%.

Also, as used herein, "a $\Delta R_{uv} = |R_{uv(clean)} - R_{uv(stained)}| \leq 7\%$" includes the following values and/or any intervals comprised between these values (in %): 7; 6.9; 6.8; 6.7; 6.5; 6.4; 6.3; 6.2; 6.1; 6.0; 5.9; 5.8; 5.7; 5.6; 5. 5; 5.4; 5.3; 5.2; 5.1; 5.0; 4.9; 4.8; 4.7; 4.6; 4.5; 4.4; 4.3; 4.2; 4.1; 4.0; 3.9; 3.8; 3.7; 3.6; 3.5; 3.4; 3.3; 3.2; 3.1; 3.0; 2.9; 2.8; 2.5; 2.4; 2.3; 2.2; 2.1; 2.0; 1.9; 1.8; 1.7; 1.6; 1.5; 1.4; 1.3; 1.2; 1.1; 1.0; 0.9; 0.8; 0.7; 0.6; 0.5; 0.4; 0.3; 0.2; 0.1; 0.0.

According to a characteristic of the invention, the mean reflection factor in the UV region is relatively low whatever the state. In particular, $R_{uv(clean)}$ and/or $R_{uv(stained)}$ is lower than or equal to 10, preferably ≤ 9.5, in particular ≤ 8.0% and typically ≤ 5%. According to the invention, "a $R_{uv(clean)}$ and/or $R_{uv(stained)}$ which is lower than or equal to 10" includes the following values and/or any intervals comprised between these values (in %): 10; 9.5; 9; 8.5; 8; 7.5; 7; 6.5; 6; 5.5; 5.0; 4.9; 4.8; 4.7; 4.6; 4.5; 4.4; 4.3; 4.2; 4.1; 4.0; 3.9; 3.8; 3.7; 3.6; 3.5; 3.4; 3.3; 3.2; 3.1; 3.0; 2.5; etc.

Then, the IF coating according to the invention has been designed to preferably reduce the colorimetric variation between the clean state and the stained state for both the wearer and the observer. Therefore, the optical article of the invention may also be characterized by its colorimetric characteristics, such as the Chroma defined as "C*", the hue, defined as "h" and some color differences $\Delta E^*_{ab}$ and $\Delta H_{ab}$. In general, these characteristics do not vary between the clean state and the stained state.

Thus, according to a characteristic of the invention, for an angle of incidence of 15°, the optical article has preferably a Chroma in the clean state, defined as $C^*_{(clean)}$ and has a Chroma in the stained state, defined as $\Delta C^* = |C^*_{(clean)} - C^*_{(stained)}| \leq 5$, especially ≤ 4 and typically ≤ 3. As used herein, "a $\Delta C^* = |C^*_{(clean)} - C^*_{(stained)}| \leq 5$" includes the following values and/or any intervals comprised between these values : 5; 4; 3; 2; 1; 0.

According to another characteristic of the invention, for an angle of incidence of 15°, the optical article has a hue in a clean state, defined as $h_{(clean)}$ and has a hue in the stained state, defined as $h_{(stained)}$, such as $\Delta h = |h_{(clean)} - h_{(stained)}| \leq 45°$, especially ≤ 20° and typically ≤ 10°. As used herein, "a $\Delta h = |h_{(clean)} - h_{(stained)}| \leq 45°$" includes the following values and/or any intervals comprised between these values (in °) : 45; 40; 35; 30; 25; 20; 19; 18; 17; 16; 15; 14; 13; 12; 11; 10; 9; 8; 7; 6; 5; 4; 3; 2; 1; 0.

According to a further characteristic, the IF coating according to the invention allows to reduce the color change, such as shown by the low value of $\Delta E^*_{ab}$ and $\Delta H_{ab}$ defined in the the international colorimetric CIE L*a*b* for an incident angle of 15°, taking the standard illuminant D65 into account.

Especially, $\Delta E^*_{ab}$ as defined above in the definition part is lower than or equal to 20, preferably lower than or equal to 15 and typically lower than or equal to 10. As used herein, "a $\Delta E^*_{ab}$ which is lower than or equal to 20" includes the following values and/or any intervals comprised between these values: 20; 19.5; 19; 18.5; 18; 17.5; 17; 16.5; 16; 15.5; 15; 14.5; 14; 13.5; 13; 12.5; 12; 11.5; 11; 10.5; 10; 9.5; 9; 8.5; 8; 7.5; 7; 6.5; 6; 5.5; 5; 4.5; 4; 3.5; 3; 2.5; 2.0, etc.

In addition, $\Delta H^*_{ab}$ is in particular lower than or equal to 20, preferably lower than or equal to 15 and typically lower than or equal to 10. Also, as used herein, "a $\Delta H^*_{ab}$ which is lower than or equal to 20" includes the following values and/or any intervals comprised between these values: 20; 19.5; 19; 18.5; 18; 17.5; 17; 16.5; 16; 15.5; 15; 14.5; 14; 13.5; 13; 12.5; 12; 11.5; 11; 10.5; 10; 9.5; 9; 8.5; 8; 7.5; 7; 6.5; 6; 5.5; 5; 4.5; 4; 3.5; 3; 2.5; 2.0, 1.5; 1.0; 0.5; 0.4; 0.3; 0.2; 0.1; 0.

According to another characteristic of the invention, for an angle of incidence of 0°, the optical article has a transmission factor in the visible, in a clean state, defined as $T_{v(clean)}$ and has a transmission factor in the visible, in the stained state, defined as $T_{v\,(stained)}$, such as $\Delta T_v = |T_{v\,(clean)} - T_{v\,(stained)}| \leq 1\%$, especially ≤ 0.90 % and typically ≤ 0.80%. As used herein, "a $\Delta T_v = |T_{v\,(clean)} - T_{v\,(stained)}| \leq 1\%$" includes the following values and/or any intervals comprised between these values (in %) : 1.00; 0.90; 0.80; 0.70; 0.60; 0.50; 0.40; 0.35; 0.30; 0.25; 0.20; 0.19; 0.18; 0.17; 0.16; 0.15; 0.14; 0.13; 0.12; 0.11; 0.10; 0.09; 0.08; 0.07; 0.06; 0.05; 0.04; 0.03; 0.02; 0.01; 0.

More specifically, $T_{v(clean)}$ and $T_{v\,(stained)}$, for clear lenses, i.e. for optical article according to the invention that does not absorb in the visible or not much, which means, in the context of the present application, are each higher or equal to 85% , more preferably, higher than 90%, more preferably higher than 95%, even more preferably higher than 96%.

In another embodiment, for sunglasses, i.e. for optical article according to the invention that absorbs in the visible, for example thanks to absorbing dyes, which means, in the context of the present application, $T_{v(clean)}$ and $T_{v\,(stained)}$ are each lower than or equal to any one of the following values: 79%, 78 %, 43%, 18%, 8%, 5%.

Accordingly, different tints of sunglasses with different visible light mean transmission factors $T_{v(clean)}$ and $T_{v\,(stained)}$ can be obtained:

- from 43 to 80 % (known as sunglasses of category or class 1),
- from 18 to 43 % (known as sunglasses of class 2),
- from 8 to 18% (known as sunglasses of class 3),
- below 8 % (known as sunglasses of class 4).

Therefore, thanks to its characteristics, the IF coating enables to reduce the visibility of greasy deposits since the optical characteristics, such as the reflection in the visible and preferably also in the UV region do not vey between the clean state and the stained state. Furthermore, the IF coating may also enable to reduce the colorimetric characteristics between the clean state and the stained state.

Now, the structure of the LI and HI layer(s) of the IF coating will be described hereafter.

HI layers and LI layers don't need to alternate with each other in the stack of the IF coating, although they also may, according to one embodiment of the invention. Two HI layers (or more) may be deposited onto each other, as well as two LI layers (or more) may be deposited onto each other. In general, the HI layers and LI layers alternate with each other in the stack of the IF coating according to the invention.

In the present application, when two HI layers (or more) are deposited onto each other, they are not considered as being a single HI layer when counting the number of layers of the interferential stack. The same applies to stacks of two or more adjacent LI layers.

It is here a simple stack, since the layer total number in the IF coating (including the outermost LI sheet) is higher than or equal to 4 and in general lower than or equal to 16.

According to an aspect of the invention, the total number of HI and LI layers in the IF coating is higher than or equal to 5, preferably higher than or equal to 6, more preferably higher than or equal to 7 and typically higher than or equal to 8, such as higher than or equal to 9.

According to another aspect of the invention, the total number of HI and LI layers in the IF coating is lower than or equal to 16, especially lower than or equal to preferably lower than or equal to 15, more preferably lower than or equal to 13 and typically lower than or equal to 12.

For instance, the total number of HI and LI layers in the IF coating ranges from 4 to 15 layers, preferably from 7 to 11 layers.

In general, the HI layers are conventional high-refractive-index layers, well known in the art. They generally contain one or more mineral oxides such as, in a non-limiting manner, zirconia ($ZrO_2$), titanium oxide ($TiO_2$), trititanium pentoxide ($Ti_3O_5$), alumina ($Al_2O_3$), tantalum pentoxide ($Ta_2O_5$), neodymium oxide ($Nd_2O_5$), praseodymium oxide ($Pr_2O_3$), praseodymium titanate ($PrTiO_3$), $La_2O_3$, $Nb_2O_5$, or $Y_2O_3$. Optionally the high-index layers may also contain silica or other low-refractive-index materials, provided that their refractive index is higher than 1.6 as indicated above. Preferred materials are $TiO_2$, $PrTiO_3$, $ZrO_2$, $Ta_2O_5$, $Al_2O_3$, $Y_2O_3$ and their mixtures. Preferably, the one or more HI layers are made of zirconia ($ZrO_2$) or tantalum pentoxide ($Ta_2O_5$).

The LI layers are also well-known low-refractive-index layers and may comprise, in a non-limiting manner: silicon oxide, or else a mixture of silica and alumina, in particular silica doped with alumina, the latter contributing to increase the thermal resistance of the UV-reflecting interference coating. Each LI layer is preferably a layer comprising at least 80% by weight silica and better still at least 90% by weight silica, relative to the total weight of the layer, and even better still consists of a silica layer (i.e.: not obtained by evaporation of at least one precursor compound, such as $SiO_2$, using electron-beam evaporation with introduction of oxygen gas in the vacuum chamber).

Optionally, the low-index layers may also contain high-refractive-index materials, provided that the refractive index of the resulting layer is lower than 1.55. When a LI layer comprising a mixture of $SiO_2$ and $Al_2O_3$ is used, it preferably comprises from 1% to 10% by weight, better still from 1% to 8% by weight and even better still from 1% to 5% by weight of $Al_2O_3$, with respect to the total weight of $SiO_2$ + $Al_2O_3$ in this layer. For example, $SiO_2$ doped with 4% or less $Al_2O_3$ by weight, or $SiO_2$ doped with 8% $Al_2O_3$ may be employed. Commercially available SiOz / $Al_2O_3$ mixtures may be used, such as the LIMA® mixture sold by Umicore Materials AG (refractive index comprised between n = 1.48-1.50 to 550 nm) or the substance L5® sold by Merck KGaA (refractive index n = 1.48 to 500 nm).

In general, the one or more LI layers are made of silicon dioxide ($SiO_2$).

The optical article, such as an ophthalmic lens, of the invention may be made antistatic, i.e., such as to not retain and/or develop an appreciable electrostatic charge, by virtue of the incorporation of at least one electrically conductive layer into the stack present on the surface of the ophthalmic lens.

This electrically conductive layer is preferably located between two layers of IF coating and/or is adjacent to a high-refractive-index layer of this IF coating. Preferably, the electrically conductive layer is located immediately under the outermost LI layer of the IF coating, and ideally forms the penultimate layer of the IF coating, i.e., it is located immediately under the outermost LI layer of the IF coating according to the invention.

The electrically conductive layer must be sufficiently thin not to decrease the transparency of the UV-reflecting interference coating. The electrically conductive layer is preferably made from an electrically conductive and highly transparent material, generally an optionally doped metal oxide. In this case, its thickness preferably ranges from 1 to 15 nm and more preferably from 1 to 10 nm. The electrically conductive layer preferably comprises an optionally doped metal oxide chosen from indium oxide, tin oxide ($SnO_2$), zinc oxide and their mixtures. Indium tin oxide (tin-doped indium oxide, $In_2O_3$:Sn), aluminum-doped zinc oxide (ZnO:Al), indium oxide ($In_2O_3$), and tin oxide ($SnO_2$) are preferred. According to one optimal embodiment, the electrically conductive and optically transparent layer is a layer of indium tin oxide (ITO) or a layer of tin oxide ($SnO_2$).

Generally, the electrically conductive layer contributes, within the stack, but to a limited extent, because of its small thickness, to the obtainment of antireflection properties and forms a high-refractive-index layer in the AR coating (also is considered as a HI layer when counting the number of layers). This is the case for layers made from an electrically conductive and highly transparent material such as layers of ITO.

According to another aspect of the invention, the IF coating has a total physical thickness lower than or equal to 1 μm, in particular lower than or equal to 900 nm and typically lower than or equal to 750 nm.

As used herein, "a thickness lower than or equal to 1 μm" includes the following values (in nm) and/or any intervals comprised between these values (limits included): 1000; 950; 900; 850; 800; 790; 780; 770; 760; 750; 740; 730; 720; 710; 700; 690; 680; 670; 660; 650; 640; 630; 620; 610; 600; 590; 580; 570; 560; 550; 540; 530; 520; 510; 500; 490; 480; 470; 460; 450; 440; 430; 420; 410; 400; 380; 350; 320; 300; 280; 250; 240; 220, etc.

In particular, each LI layer of the IF coating has a physical thickness lower than or equal to 200 nm, such as lower than or equal to 180 nm, preferably lower than or equal to 170 nm, more preferably lower than or equal to 160 nm.

In addition, the second LI layer which is the closest from the substrate has a thickness higher than or equal to 100 nm, preferably higher than or equal to 110 nm, in particular higher than or equal to 120 nm and typically higher than or equal to 130 nm, such as ranges from 100 to 180 nm. As used herein, "a physical thickness higher than or equal to 100 nm" includes the following values (in nm) and/or any intervals comprised between these values (limits included): 100; 105; 110; 115; 120; 125; 130; 135; 140; 145; 150; 155; 160; 165; 170; 175; 180; etc.

Moreover, except the second LI layer which is the closest from the substrate, the other LI layers have generally a thickness which is lower than or equal to 150 nm, preferably lower than or equal to 145 nm, in particular lower than or equal to 140 nm and typically ranges from 10 to 140 nm. As used herein, "a physical thickness lower than or equal to 150 nm" includes the following values (in nm) and/or any intervals comprised between these values (limits included): 150; 145; 140; 135; 130; 125; 120; 115; 110; 105; 100; 95; 90; 85; 80; 75; 70; 65; 60; 55; 50; 45; 40; 35; 30; 25; 20; 15; 10; 8; 5; etc.

Generally, the outermost LI layer of the IF coating has a physical thickness lower than or equal to 200 nm, such as lower than or equal to 160 nm, preferably lower than or equal to 150 nm, more preferably lower than or equal to 140 nm and typically lower than or equal to 130 nm. In particular, the outermost LI layer has a physical thickness higher than or equal to 50 nm, preferably higher than or equal to 55 nm and typically higher than or equal to 58 nm.

Generally, each HI layer of the IF coating may have a physical thickness lower than or equal to 110 nm, preferably lower than or equal to 100 nm, more preferably lower than or equal to 90 nm, typically lower than or equal to 85 nm.

According to a characteristic of the invention, the innermost layer is a HI layer having a thickness lower than or equal to 60 nm, preferably lower than or equal to 55 nm, in particular lower than or equal to 50 nm and typically ranging from 8 to 45 nm, such as ranging from 10 to 25 nm. As used herein, "a physical thickness lower than or equal to 60 nm" includes the following values (in nm) and/or any intervals comprised between these values (limits included): 60; 55; 50; 45; 40; 35; 30; 25; 20; 15; 10; 9; 8; 7; 6; 5; etc.

According to another characteristic of the invention, the second HI layer which is the closest from the substrate has generally a thickness lower than or equal to 60 nm, preferably lower than or equal to 50 nm, in particular lower than or equal to 40 nm and typically ranges from 8 to 30 nm. As used herein, "a physical thickness lower than or equal to 60 nm" includes the following values (in nm) and/or any intervals comprised between these values (limits included): 60; 55; 50; 45; 40; 35; 30; 25; 20; 15; 10; 9; 8; 7; 6; 5; etc.

According to another characteristic of the invention, the HI layer which is the furthest from the substrate (and which does not correspond to an antistatic layer) may have a thickness lower than or equal to 30 nm, in particular ranging from 8 nm to 25 nm, preferably ranging from 8 nm to 20 nm, and typically ranging from 10 nm to 15 nm.

Also, the IF coating comprises preferably in its stack and starting from the base element, a succession of three layers that are in direct contact and composed advantageously of (1)$ZrO_2$/(2)$SiO_2$/(3)$ZrO_2$ (also named ZQZ). In general, the first (1)ZrOz layer corresponds to the second HI layer of the IF coating which is the closest from the base element and the LI layer corresponds to the second LI layer of the IF coating which is the closest from the base element. This succession of the three layers has preferably the following thickness:

- a physical thickness lower than or equal to 40 nm, in particular ranging from 8 nm to 35 nm, preferably ranging from 8 nm to 30 nm, and typically ranging from 10 nm to 25 nm (preferably corresponds to (1)ZrOz);
- a physical thickness higher than 100 nm, in particular ranging from 125 nm to 170 nm, preferably ranging from 130 nm to 165 nm, and typically ranging from 140 nm to 160 nm (preferably corresponds to (2)$SiO_2$);
- a thickness lower than or equal to 40 nm, in particular ranging from 8 nm to 30 nm, preferably ranging from 8 nm to 25 nm, and typically ranging from 10 nm to 20 nm (preferably corresponds to (3)$ZrO_2$);

Moreover, the IF coating has a good resistance to heat and temperature variations, i.e., a high critical temperature. In the present patent application, the critical temperature of an article is defined as being the temperature starting from which cracks appear in a coating present at the surface of the substrate (on either main face), which results in degradation of the coating, generally the interferential coating. The critical temperature of an article coated according to the

invention is preferably > 70°C, more preferably > 75°C, 80°C, 90°C, 100°C or 1 10°C.

$R_T$ ratio is defined as follows:

$$\mathrm{RT} = \frac{sum\ of\ the\ physical\ thicknesses\ of\ the\ LI\ layers\ in\ the\ IF\ coating}{sum\ of\ the\ physical\ thicknesses\ of\ the\ HI\ layers\ in\ the\ IF\ coating}$$

In the present invention, only layers of the interferential coating are taken into account for the calculation of said ratio $R_T$, i.e., only the layers located above an optional sub-layer that will be described below.

In one embodiment $R_T$ is higher than or equal to 0.8, preferably higher than or equal to 1; 1.3, 1.5, 1.9, 2, 2.1 , 2.2 or 2.5. In general, $R_T$ is higher than or equal to 1.5, preferably higher than or equal to 1.9 and especially higher than or equal to 2.0. In one embodiment, $R_T$ is lower than 5, preferably lower than at least one of the following values 4, 3.5, 3. In another embodiment, $R_T$ ranges from 0.8 to 2.5. It is preferable to have a high $R_T$ ratio, in order to have an article showing a higher critical temperature, while exhibiting in the same time high abrasion resistance.

For instance, according to one embodiment, the IF coating comprises, in order starting from the base element/substrate, which is optionally coated with one or more functional coatings:

(1) the innermost HI layer having a physical thickness lower than or equal to 60 nm, in particular ranging from 5 nm to 50 nm, preferably ranging from 8 nm to 45 nm, and typically ranging from 8 nm to 40 nm;
(2) an innermost LI layer having a physical thickness lower than or equal to 100 nm, in particular ranging from 5 nm to 100 nm, preferably ranging from 8 nm to 95 nm, and typically ranging from 10 nm to 90 nm, such as ranging from 15 nm to 90 nm;
(3) a HI layer having a physical thickness lower than or equal to 150 nm, in particular ranging from 20 nm to 140 nm, preferably ranging from 30 nm to 120 nm, and typically ranging from 35 nm to 110 nm;
(4) an LI Layer having a physical thickness lower than or equal to 60 nm, in particular ranging from 5 nm to 50 nm, preferably ranging from 8 nm to 45 nm, and typically ranging from 20 nm to 40 nm;
(5) a HI layer having a physical thickness lower than or equal to 100 nm, in particular ranging from 10 nm to 90 nm, preferably ranging from 20 nm to 80 nm, and typically ranging from 20 nm to 75 nm;
(6) an optional antistatic layer having a physical thickness lower than or equal to 15 nm, in particular ranging from 4 nm to 10 nm;
(7) the outermost LI sheet having a physical thickness lower than or equal to 160 nm, in particular ranging from 20 nm to 150 nm, preferably ranging from 30 nm to 145 nm, and typically ranging from 40 nm to 140 nm.

According to a characteristic of this embodiment, the IF coating comprises, in order starting from the base element/substrate, which is optionally coated with one or more functional coatings:

(1) the innermost HI layer having a physical thickness lower than or equal to 60 nm, in particular ranging from 5 nm to 50 nm, preferably ranging from 8 nm to 45 nm, and typically ranging from 20 nm to 40 nm;
(2) an innermost LI layer having a physical thickness lower than or equal to 70 nm, in particular ranging from 5 nm to 60 nm, preferably ranging from 8 nm to 50 nm, and typically ranging from 10 nm to 40 nm, such as ranging from 15 nm to 30 nm;
(3) a HI layer having a physical thickness lower than or equal to 150 nm, in particular ranging from 70 nm to 140 nm, preferably ranging from 80 nm to 120 nm, and typically ranging from 90 nm to 110 nm;
(4) an LI Layer having a physical thickness lower than or equal to 60 nm, in particular ranging from 10 nm to 50 nm, preferably ranging from 20 nm to 45 nm, and typically ranging from 30 nm to 40 nm;
(5) a HI layer having a physical thickness lowerthan or equal to 60 nm, in particular ranging from 10 nm to 55 nm, preferably ranging from 20 nm to 45 nm, and typically ranging from 20 nm to 35 nm;
(6) an optional antistatic layer having a physical thickness lower than or equal to 15 nm, in particular ranging from 4 nm to 10 nm;
(7) the outermost LI sheet having a physical thickness lower than or equal to 100 nm, in particular ranging from 30 nm to 90 nm, preferably ranging from 40 nm to 80 nm, and typically ranging from 50 nm to 70 nm.

According to another characteristic of this embodiment, the IF coating comprises, in order starting from the base element/substrate, which is optionally coated with one or more functional coatings:

(1) the innermost HI layer having a physical thickness lower than or equal to 50 nm, in particular ranging from 5 nm to 40 nm, preferably ranging from 8 nm to 30 nm, and typically ranging from 8 nm to 20 nm;
(2) an innermost LI layer having a physical thickness lower than or equal to 100 nm, in particular ranging from 70 nm to

100 nm, preferably ranging from 65 nm to 100 nm, and typically ranging from 70 nm to 95 nm, such as ranging from 80 nm to 90 nm;
(3) a HI layer having a physical thickness lowerthan or equal to 80 nm, in particular ranging from 20 nm to 70 nm, preferably ranging from 30 nm to 60 nm, and typically ranging from 35 nm to 55 nm;
(4) an LI Layer having a physical thickness lower than or equal to 60 nm, in particular ranging from 5 nm to 50 nm, preferably ranging from 8 nm to 45 nm, and typically ranging from 20 nm to 40 nm;
(5) a HI layer having a physical thickness lower than or equal to 100 nm, in particular ranging from 10 nm to 90 nm, preferably ranging from 20 nm to 80 nm, and typically ranging from 20 nm to 70 nm;
(6) an optional antistatic layer having a physical thickness lower than or equal to 15 nm, in particular ranging from 4 nm to 10 nm;
(7) the outermost LI sheet having a physical thickness lower than or equal to 160 nm, in particular ranging from 100 nm to 150 nm, preferably ranging from 110 nm to 145 nm, and typically ranging from 120 nm to 140 nm.

According to another embodiment, the IF coating comprises, in order starting from the base element/substrate, which is optionally coated with one or more functional coatings:

(1) the innermost HI layer having a physical thickness lower than or equal to 50 nm, in particular ranging from 5 nm to 50 nm, preferably ranging from 8 nm to 40 nm, and typically ranging from 10 nm to 30 nm, such as 10 nm to 25 nm;
(2)a LI layer having a physical thickness lower than or equal to 70 nm, in particular ranging from 20 nm to 70 nm, preferably ranging from 25 nm to 70 nm, and typically ranging from 30 nm to 65 nm, such as ranging from 35 nm to 60 nm, such as 40 nm to 55 nm;
(3) a HI layer having a physical thickness lowerthan or equal to 40 nm, in particular ranging from 8 nm to 35 nm, preferably ranging from 8 nm to 30 nm, and typically ranging from 10 nm to 25 nm;
(4) a LI layer (which is the second LI layer the closest from the substrate) having a physical thickness higher than 100 nm, in particular ranging from 125 nm to 170 nm, preferably ranging from 130 nm to 165 nm, and typically ranging from 140 nm to 160 nm,
(5) a HI layer having a physical thickness lowerthan or equal to 40 nm, in particular ranging from 8 nm to 30 nm, preferably ranging from 8 nm to 25 nm, and typically ranging from 10 nm to 20 nm;
(6) a LI layer having a physical thickness lower than or equal to 70 nm, in particular ranging from 5 nm to 70 nm, preferably ranging from 8 nm to 65 nm, and typically ranging from 8 nm to 60 nm, such as ranging from 8 nm to 55 nm, such as 10 nm to 50 nm;
(7) a HI layer having a physical thickness lowerthan or equal to 60 nm, in particular ranging from 8 nm to 60 nm, preferably ranging from 8 nm to 55 nm, and typically ranging from 10 nm to 50 nm;
(8) a LI layer having a physical thickness lower than or equal to 60 nm, in particular ranging from 5 nm to 60 nm, preferably ranging from 8 nm to 55 nm, and typically ranging from 8 nm to 50 nm, such as ranging from 8 nm to 40 nm, such as 10 nm to 35 nm;
(9) a HI layer having a physical thickness lower than or equal to 100 nm, in particular ranging from 8 nm to 95 nm, preferably ranging from 8 nm to 90 nm, and typically ranging from 10 nm to 85 nm;
(10) an optional antistatic layer having a physical thickness lower than or equal to 15 nm, in particular ranging from 4 nm to 10 nm;
(11) the outermost LI layer having a physical thickness lower than or equal to 140 nm, in particular ranging from 30 nm to 130 nm, preferably ranging from 35 nm to 125 nm, and typically ranging from 40 nm to 120 nm.

According to this embodiment, the IF coating comprises, in order starting from the base element/substrate, which is optionally coated with one or more functional coatings:

(1) the innermost HI layer having a physical thickness lower than or equal to 50 nm, in particular ranging from 5 nm to 50 nm, preferably ranging from 8 nm to 40 nm, and typically ranging from 10 nm to 30 nm, such as 15 nm to 25 nm;
(2) a LI layer having a physical thickness lower than or equal to 70 nm, in particular ranging from 20 nm to 70 nm, preferably ranging from 25 nm to 60 nm, and typically ranging from 30 nm to 55 nm, such as ranging from 35 nm to 50 nm, such as 40 nm to 45 nm;
(3) a HI layer having a physical thickness lower than or equal to 40 nm, in particular ranging from 8 nm to 35 nm, preferably ranging from 8 nm to 25 nm, and typically ranging from 10 nm to 15 nm;
(4) a LI layer (which is the second LI layer the closest from the substrate) having a physical thickness higher than 100 nm, in particular ranging from 130 nm to 160 nm, preferably ranging from 135 nm to 155 nm, and typically ranging from 140 nm to 150 nm,
(5) a HI layer having a physical thickness lowerthan or equal to 30 nm, in particular ranging from 8 nm to 25 nm, preferably ranging from 8 nm to 20 nm, and typically ranging from 10 nm to 15 nm;

(6) a LI layer having a physical thickness lower than or equal to 50 nm, in particular ranging from 5 nm to 50 nm, preferably ranging from 8 nm to 45 nm, and typically ranging from 8 nm to 40 nm, such as ranging from 10 nm to 35 nm, such as 15 nm to 30 nm;

(7) a HI layer having a physical thickness lowerthan or equal to 60 nm, in particular ranging from 25 nm to 60 nm, preferably ranging from 30 nm to 55 nm, and typically ranging from 35 nm to 50 nm;

(8) a LI layer having a physical thickness lower than or equal to 60 nm, in particular ranging from 5 nm to 60 nm, preferably ranging from 8 nm to 55 nm, and typically ranging from 8 nm to 50 nm, such as ranging from 8 nm to 40 nm, such as 15 nm to 35 nm;

(9) a HI layer having a physical thickness lowerthan or equal to 30 nm, in particular ranging from 8 nm to 25 nm, preferably ranging from 8 nm to 20 nm, and typically ranging from 10 nm to 15 nm;

(10) an optional antistatic layer having a physical thickness lower than or equal to 15 nm, in particular ranging from 4 nm to 10 nm;

(11) the outermost LI layer having a physical thickness lower than or equal to 120 nm, in particular ranging from 80 nm to 110 nm, preferably ranging from 85 nm to 105 nm, and typically ranging from 90 nm to 100 nm.

### B.3 Sub-layer

In one embodiment of the present invention, the IF coating may be deposited (generally directly) onto a sub-layer (i.e.: the sub-layer is positioned between the substrate and the interferential coating), also named "underlayer". It should be noted that such sub-layer does not belong to the IF coating according to the invention. The expression " a sub-layer" is understood to mean a coating of relatively large thickness used with the aim of improving mechanical properties such as the resistance of said coating to abrasion and/or scratches and/or to promote its adhesion to the substrate or to the subjacent coating.

On account of its relatively large thickness, the underlayer generally does not participate in the interference optical activity, in particular in the case where it possesses a refractive index similar to that of the underlying coating (which is generally an anti-abrasion and anti-scratch coating) or that of the substrate when the underlayer is deposited directly on the substrate. Therefore, the underlayer, when it is present, is not considered to form part of the reflecting properties of the IF coating.

The underlayer must be thick enough to increase the resistance of the IF coating to abrasion, but preferably not too thick in order not to absorb light as, depending on the nature of the underlayer, this could significantly decrease the relative transmittance $T_v$. Its thickness is generally smaller than 300 nm and better still 200 nm and is generally larger than 90 nm and better still 100 nm.

The underlayer preferably comprises a layer based on $SiO_2$, this layer preferably comprising at least 80% by weight silica and better still at least 90% by weight silica relative to the total weight of the layer, and even better still this layer consists of a silica layer. The thickness of this silica-based layer is generally smaller than 300 nm and better still 200 nm and is generally larger than 90 nm and better still 100 nm. According to another embodiment, this $SiO_2$-based layer is a layer of silica doped with alumina, in proportions such as defined above, and preferably consists of a layer of silica doped with alumina.

According to one particular embodiment, the underlayer consists of a layer of SiOz. It is preferable for the underlayer to be a monolayer.

However, the underlayer may be laminated (i.e.: multilayered sub-layer), in particular when the underlayer and the underlying coating (or the substrate if the underlayer is deposited directly on the substrate) have a non-negligible refractive index difference. Such a multilayered sub-layer generally comprises, in addition to the main layer (described above), a layer with a high refractive index and with a thickness lower than or equal to 80 nm, more preferably lower than or equal to 50 nm and most preferably lower than or equal to 30 nm. Such layer with a high refractive index is directly contacting the substrate with a high refractive index or the underlying coating with a high refractive index, as appropriate. Of course, this embodiment may be used even if the substrate (or the underlying coating) has a refractive index lower than 1.55.

### B.4 Other functional layers

In some applications, it is preferred that the main surface of the substrate be coated with one or more functional coatings improving its optical and/or mechanical properties, prior to depositing the interferential coating of the invention.

These functional coatings traditionally used in optics may be, without limitation, an impact-resistant primer layer, an internal abrasion-resistant coating (also named hard coat), an antistatic coating especially on the concave face of the optical article, or a stack made of two or more of such coatings.

Preferably, the ophthalmic lens comprises no photochromic coating and/or comprises no photochromic substrate and/or no hydrophobic coatings and/or oleophobic coatings.

Indeed, in general the optical article according to the invention does not comprise a hydrophobic coating and/or oleophobic coating which is traditionally coated as the farthest layer from the substrate (i.e.: in contact with air)

In general and by referring to Fig.1 an optical article such as an ophthalmic lens 300 according to the invention comprises a base element/substrate 301 coated in succession on its front face 303 with an anti-abrasion and/or anti-scratch layer 304, with the IF coating according to the invention 305 and the oleophilic outer layer 306 according to the invention. The optical article according to the invention is preferably an ophthalmic lens for a pair of spectacles (spectacle lenses), or an ophthalmic lens blank. The lens may be a polarized lens, a photochromic lens, or a tinted sunglass lens, optionally providing a correction.

In addition, the back face 302 of the optical article such as ophthalmic lens substrate may be coated in succession with an anti-abrasion and/or anti-scratch layer 304, with the IF coating according to the invention 307 and with the oleophilic layer 306 according to the invention.

In one embodiment, the optical article according to the invention does not absorb in the visible or not much, which means, in the context of the present application, that its transmission factor in the visible range $\tau_V$, also called relative transmission factor in the visible range, is higher than 85%, more preferably, higher than 90%, more preferably higher than 95%, even more preferably higher than 96%.

The factor $\tau_V$ should be understood as defined by the international normalized definition (ISO 13666:1998 Standard) and is measured in accordance with the ISO 8980-3 Standard. It is defined in the wavelength range of from 380 to 780 nm.

Preferably, the light absorption of the article coated according to the invention is lower than or equal to 15%, more preferably, is lower than or equal to 10%, even more preferably is lower than or equal to 10%, and most preferably lower than 5% or 1%.

*The abrasion-resistant and/or to scratch-resistant coatings*

The abrasion-resistant and/or to scratch-resistant coatings are preferably hard coatings based on poly(meth) acrylates or on silanes generally comprising one or more mineral fillers intended to increase the hardness and/or the refractive index of the coating once cured.

Hard anti-abrasion and/or anti-scratch coatings are preferably prepared from compositions comprising at least one alkoxysilane and/or a hydrolyzate of the latter, for example obtained by hydrolysis with a hydrochloric acid solution and optionally condensation and/or curing catalysts.

Mention may be made, among the coatings recommended in the present invention, of coatings based on epoxysilane hydrolyzates, such as those described in the patents FR 2702486 (EP 0614957), US 4 211 823 and US 5 015 523.

A preferred composition for an anti-abrasion and/or anti-scratch coating is that disclosed in the patent FR 2 702 486 on behalf of the applicant. It comprises an epoxytrialkoxysilane and dialkyldialkoxysilane hydrolyzate, colloidal silica and a catalytic amount of aluminum-based curing catalyst, such as aluminum acetylacetonate, the remainder being essentially composed of solvents conventionally used for the formulation of such compositions. Preferably, the hydrolyzate used is a hydrolyzate of y-glycidoxypropyltrimethoxysilane (GLYMO) and dimethyldiethoxysilane (DMDES).

The anti-abrasion and/or anti-scratch coating composition may be deposited on the main face of the substrate by dip coating or spin coating. It is subsequently cured by the appropriate route (preferably thermal or UV).

The thickness of the anti-abrasion and/or anti-scratch coating generally varies from 2 to 10 μm, preferably from 3 to 5 μm.

*Primer coating*

It is possible, prior to the deposition of the anti-abrasion and/or anti-scratch coating, to deposit, on the substrate, a primer coating which improves the impact resistance and/or the adhesion of the subsequent layers in the final product. This coating can be any impact-resistant primer layer conventionally used for articles made of transparent polymeric material, such as ophthalmic lenses.

Mention may be made, among preferred primer compositions, of compositions based on thermoplastic polyurethanes, such as those described in the Japanese patents JP 63-141001 and JP 63-87223, poly(meth)acrylic primer compositions, such as those described in the patent US 5 015 523, compositions based on thermosetting polyurethanes, such as those described in the patent EP 0 404 111, and compositions based on poly(meth)acrylic latexes or on latexes of polyurethane type, such as those described in the patents US 5 316 791 and EP 0 680 492.

Preferred primer compositions are polyurethane-based compositions and latex-based compositions, in particular polyurethane latexes optionally containing polyester units.

Among commercially available primer compositions suitable for the invention, mention may be made of the following: Witcobond(R) 232, Witcobond(R) 234, Witcobond(R) 240, Witcobond(R) 242, Neorez(R) R- 962, Neorez(R)

R-972, Neorez(R) R-986 and Neorez(R) R-9603.

It is also possible to use in the primer compositions blends of these latexes, in particular of polyurethane latex and poly(meth)acrylic latex.

These primer compositions may be deposited on the faces of the article by dip coating or spin coating then dried at a temperature of at least 70°C and possibly of as a high as 100°C and preferably of about 90°C, for a time of 2 minutes to 2 hours and generally of about 15 minutes, in order to form primer layers having thicknesses, post-bake, of 0.2 to 2.5 μm and preferably from 0.5 to 1.5 μm.

**C) Process**

The present invention may also relate to a process for manufacturing an optical article as defined in any one of the preceding claims, comprising the following steps:

(a) providing the base element having a front main surface and a rear main surface ;
(b) depositing onto said front main surface and/or said rear main surface in a vacuum chamber, said IF coating such as defined above,
(c) depositing onto said IF coating the oleophilic outer layer as defined above.

In general, the IF coating and the other layers of the optical article may be deposited by vapor phase deposition, under vacuum, in a vacuum deposition chamber, according to any of the following methods:

i) by evaporation, optionally under ion beam assistance;
ii) by ion-beam spraying;
iii) by cathode sputtering;
iv) by plasma-assisted chemical vapor deposition.

These various methods are described in the following references "Thin Film Processes" and "Thin Film Processes II," Vossen & Kern, Ed., Academic Press, 1978 and 1991, respectively. A particularly recommended method is evaporation under vacuum. Preferably, the deposition of each of the above-mentioned layers is conducted by evaporation under vacuum. Such a process does advantageously avoid heating the substrate, which is particularly interesting for coating heat-sensitive substrates such as organic glasses.

In general, the IF coating and the other layers of the optical article are deposited by evaporation, optionally under ion beam assistance.

In addition, the oleophilic layer is deposited by using thermal boat.

Naturally, the various embodiments described above for the optical article also apply to this method of manufacturing the optical article and will not be repeated below.

**D) Method of designing**

The present invention also relates to a method of designing an optical article as defined above, named hereafter "the final optical article" comprising at least the following successive steps:

(i) defining (by an individual) a starting optical article comprising at least:

(a) optionally a base element having a front main surface and a rear main surface such as defined above (when transmission factor of the optical article is considered),
(b) a starting multilayered interferential coating, defined as starting IF coating, intended to be deposited onto the front main surface and/or the rear main surface of said base element, said IF coating comprising:

a predetermined number of LI and HI layers, said predetermined number of HI and LI layers comprising at least two LI layers and at least two HI layers,
a predetermined material for each HI layer and each LI layer;
a predetermined thickness range between a minimum thickness and a maximum thickness for each HI layer and each LI layer(i.e.: define ranges of manufacturing variations of the different layers); and

(c) optionally the oleophilic outer layer such as defined above;

(ii) defining (by individual) target optical and preferably color characteristics comprising the mean reflection factor in

the visible region Rv and optionally one or more of the following characteristics: the mean reflection factor in the UV region, the transmission, the hue, the Chroma, between a clean state wherein the starting optical article is deprived from any greasy deposits and a stained state wherein the starting optical article is stained by any greasy deposits, said greasy deposits forming onto the oleophilic outer layer, an oily film corresponding to an oily layer having a thickness of 150 nm and having a refractive index of 1.45 at 550nm; the mean light reflection factor in the visible region in the clean state is defined as $R_{v(clean)}$ and the mean light reflection factor in the visible region in the stained state is defined as $R_{v(stained)}$);

(iii) performing (by individual and for a specific embodiment, with the help of a computer system) an optimization procedure by varying the thickness of the HI layers and the LI layers of the starting optical article so as to reduce the reflection change "ΔRv" between the clean state and the stained state and to obtain a final optical article having $\Delta Rv = |R_{v(clean)} - R_{v(stained)}| \leq 2\%$.

Naturally, the various embodiments described above for the optical article also apply to this method of designing of the optical article and will not be repeated below.

Especially, the method according to the invention comprises first (i) a step of defining the initial structure of a starting optical article, which is close to the one of the desired final optical article. It differs only in the structure of the multilayered interferential coating wherein especially the thickness of each layer is not specifically determined and is defined by a range having a minimum and a maximum. Thus, this step is therefore not arbitrary, and an adequate predetermined starting multilayer interferential coating can help make step (iii) easier or less complex.

In particular, at step (ii), characteristics other than Rv are defined between the clean state and the stained state of the starting optical article, such as :

- the mean reflection factor in the UV region, especially the mean reflection factor in the UV region when the starting optical article is deprived from the greasy deposits, is defined as $R_{uv(clean)}$ and when it is stained by the greasy deposits is defined as $R_{uv(stained)}$,
- the transmission, especially the transmission when the starting optical article is deprived from the greasy deposits, is defined as $T_{v(clean)}$ and when it is stained by the greasy deposits is defined as $T_{v(stained)}$,
- the hue, especially the hue when the starting optical article is deprived from the greasy deposits, is defined as $h_{(clean)}$ and when it is stained by the greasy deposits is defined as $h_{(stained)}$,
- the Chroma, especially the Chroma when the starting optical article is deprived from the greasy deposits, is defined as $C^*_{(clean)}$ and when it is stained by the greasy deposits is defined as $C^*_{(stained)}$.

Preferably, at least one, in particular at least two, typically at least three and for instance all of these characteristics are also defined in step (ii).

According to an embodiment, step (iii) is implemented (at least in part) in a computer system comprising an optical design software.

Especially, said optical design software is adapted to and/or configured to reduce the reflection change ΔRv such as $\Delta Rv = |R_{v(clean)} - R_{v(stained)}| \leq 2\%$ and one or more and preferably all of the following characteristics: the reflection change in the UV, $\Delta R_{uv}$, such as $\Delta R_{uv} = |R_{uv(clean)} - R_{uv(stained)}| \leq 7\%$, the transmission change $\Delta T_v$, such as $\Delta T_v = |T_{v(clean)} - T_{v(stained)}| \leq 1\%$, the chroma change ΔC* such as $\Delta C^* = |C^*_{(clean)} - C^*_{(stained)}| \leq 5$ and the hue change Δh such as $\Delta h = |h_{(clean)} - h_{(stained)}| \leq 45°$.

For instance, according to this embodiment, step (iii) comprises the following sub-steps:

- to register (by an individual) the definition of the starting optical article of step (i) and the definitions of the target optical and preferably color characteristics of step (ii) into the computer system;
- to compute these definitions into the computer system comprising the optical design software adapted to and/or configured to reduce the reflection change ΔRv such as $\Delta Rv = |R_{v(clean)} - R_{v(stained)}| \leq 2\%$ and one or more and preferably all of the following characteristics: the reflection change in the UV, $\Delta R_{uv}$, such as $\Delta R_{uv} = |R_{uv(clean)} - R_{uv(stained)}| \leq 7\%$, the transmission change $\Delta T_v$, such as $\Delta T_v = |T_{v(clean)} - T_{v(stained)}| \leq 1\%$, the chroma change ΔC* such as $\Delta C^* = |C^*_{(clean)} - C^*_{(stained)}| \leq 5$ and the hue change Δh such as $\Delta h = |h_{(clean)} - h_{(stained)}| \leq 45°$ and to get more than 8000 proposals, in general, equal to or more than 10000 proposals of manufacturing variations of the at least two LI layers and of the at least two HI layers of the starting IF coating multilayered interferential coating,
- to analyze (by an individual) the different proposals and to adjust the structure of the final multilayered interferential coating and of final optical article.

All optical targets and/or color characteristics can be optimized for one or for multiple angles of incidence (AoI) of light. Typically 15° is generally used (except for $R_{UV}$ for which it is 35°, or for Tv for which it is 0°). For color characteristics, in order to achieve low color change whatever the angle of incidence of light, it is preferred to optimize the color

characteristic(s) for different Aols.

**EXAMPLES**

**A) Characterization**

Optical and colorimetric measurements (in reflection) of the surface of the base element (i.e.: substrate) coated on its front surface with the exemplified interferential multilayered coatings (front face) : mean reflection factors Rv, Ruv, hue angle h, chroma C* in the international colorimetric CIE (L*, a*, b*) space were carried out with a spectrophotometer, taking into account the standard illuminant D65, and the standard observer 10° (for h and C*). They are provided for an angle of incidence of 15° for forward reflection (Cx face) and 35° for backward reflection (Cc face).

**B) General procedures**

The ophthalmic lenses employed in the examples comprise a MR8® lens substrate (Ref.1, Ref.2, Lenses 1 to 8) of 65 mm diameter, of refractive index of 1.60, of -2.00 diopter power and of 1.2 mm thickness (and 2 mm for the center thickness for Tv optimization), coated successively on its front and back faces with the anti-abrasion and anti-scratch coating (hard coat) corresponding to the product Elis Mithril® hard coating (Essilor) of 3.5 μm thickness (refractive index of 1.6) , then the tested IF coating according to the prior art or according to the invention and then the oleophilic outer layer.

The layers of the IF coating were deposited without heating of the substrates by vacuum evaporation (evaporation source: the electron gun) (without introduction of an oxygen gas flow).

The deposition tool was a Satis 1200DLF machine equipped with a Temescal (8kV) electron gun for the evaporation of the oxides, and a (Veeco Mark II) ion gun for the preliminary phase of preparing the surface of the substrate with argon ions (IPC).

The thickness of the layers was controlled by means of a quartz microbalance. The spectral measurements were carried out using a variable-incidence Perkin-Elmer lambda 850 spectrophotometer with a universal reflectance accessory (URA).

The oleophilic outer layer corresponds to the commercial product KY1604(100) provided by the company Shin Etsu and has a thickness of 8 nm. For the deposition process, the product (pure material, without solvent) is deposited onto a cupper cup with metal foam (no heating step), the deposition is realized by using thermal boat (thermal evaporation under vacuum).

**C) Test procedure**

The process used to prepare the ophthalmic lenses comprised introducing the substrate coated on its front face with the anti-abrasion and anti-scratch coating into a vacuum deposition chamber, a step of pumping the chamber down until a secondary vacuum was obtained, a step of activating the surface of the substrate with a beam of argon ions (anode current: 1 A, anode voltage: 100 V, neutralization current: 130 mA), turning the ion irradiation off, forming the various layers of the IF coating by successive evaporations such as illustrated on the different tables below, and a step of ion bombardment (with Argon) is used to activate the surface before deposition of oleophilic layer before forming the oleophilic layer by thermal boat and at last a ventilation step.

The clean state corresponds to the exemplified lenses deprived from an oily layer having a thickness of 150 nm (corresponding to a stain of fingerprints) and having a refractive index of 1.45 at 550 nm.

On the contrary, the stained state corresponds to the exemplified lenses wherein an oily layer having a thickness of 150 nm (corresponding to a stain of fingerprints) and having a refractive index of 1.45 at 550 nm is directly coated onto the oleophilic outer layer (the oily layer corresponds to the sample 3 described in the publication issued from Optics & Laser Technology 34 (2002) 125-128, Elsevier "Refractive index of standard oils as a function of wavelength and temperature").

**D) Tested Lenses and results**

**D.1 Structures of three comparative lenses according to the prior art named Ref.1, Ref.2 and Rf.3 and lenses according to the invention, named Ex. 1 to 8**

*Table 1*

| | Material | **REF 1** | **REF2** | Material | **REF3** |
|---|---|---|---|---|---|
| L9 | $SiO_2$ | 95.6 | 97.8 | - | - |
| L8 | $SnO_2$ | 6.5 | 6.5 | - | - |
| L7 | $Ta_2O_5$ | 37.0 | 54.4 | - | - |
| L6 | $SiO_2$ | 38.5 | 20.8 | - | - |
| L5 | $ZrO_2$ | 23.4 | 26.8 | - | - |
| L4 | $SiO_2$ | 154.7 | 201.7 | $SiO_2$ | 143.3 |
| L3 | $ZrO_2$ | 10.8 | 11.8 | $ZrO_2$ | 82.4 |
| L2 | $SiO_2$ | 49.8 | 47.4 | $SiO_2$ | 51.6 |
| L1 | $ZrO_2$ | 12.1 | 8.1 | $ZrO_2$ | 23.9 |
| Substrate | | Mithril HI | | | |
| **LI/HI Ratio** | | **2.2** | **1.5** | - | **1.83** |

| | Material | **Ex 1** | **Ex 2** | **Ex 3** | **Ex 4** | **Ex 5** | **Ex 6** | **Ex 8** | Material | **Ex7** |
|---|---|---|---|---|---|---|---|---|---|---|
| **L11** | $SiO_2$ | 58.6 | 135.8 | 111.9 | 95.0 | 117.8 | 119.2 | 46.17 | $SiO_2$ | 113.5 |
| **L10** | ITO | 5.5 | 5.5 | 5.5 | 5.5 | 5.5 | 5.5 | 5.50 | $SnO_2$ | 6.5 |
| **L9** | $ZrO_2$ | 29.0 | 67.9 | 38.2 | 13.9 | 82.5 | 58.0 | 20.67 | $Ta_2O_5$ | 60.3 |
| **L8** | $SiO_2$ | 35.5 | 30.0 | 20.2 | 26.8 | 13.9 | 15.8 | 33.34 | $SiO_2$ | 14.3 |
| **L7** | $ZrO_2$ | 100 | 46.8 | 45.7 | 42 | 14.2 | 11.7 | 46.88 | $Ta_2O_5$ | 18.7 |
| **L6** | $SiO_2$ | 22.4 | 87.3 | 21.6 | 28.1 | 13.3 | 24.5 | 45.63 | $SiO_2$ | 14.7 |
| **L5** | $ZrO_2$ | 38 | 10.8 | 11.9 | 13.2 | 14.5 | 16.2 | 10.97 | $Ta_2O_5$ | 16.1 |
| **L4** | $SiO_2$ | / | / | 152.5 | 144.9 | 156.5 | 148.7 | 147.46 | $SiO_2$ | 153.8 |
| **L3** | $ZrO_2$ | / | / | 11.3 | 9.4 | 24.18 | 22.0 | 16.70 | $ZrO_2$ | 18.0 |
| **L2** | $SiO_2$ | / | / | 53.6 | 44.1 | 52.1 | 53.7 | 43.17 | $SiO_2$ | 53.2 |
| **L1** | $ZrO_2$ | / | / | 15.8 | 20.3 | 20.4 | 18.4 | 15.37 | $ZrO_2$ | 17.9 |
| Substrate | | Mithril HI | | | | | | | | |
| **$R_T$ (LI/HI) Ratio** | | **0.7** | **2.0** | **1.6** | **2.2** | **1.3** | **1.9** | **1.6** | - | **1.5** |

*Table 2*

D.2 Results

The results are given in the Tables 3 and below:

| | | Rv @15° (%) | C* @15° | h* @15° | Ruv @35° (%) | TvD65(0°) |
|---|---|---|---|---|---|---|
| **REF 1 (AR)** | Clean state | 0.77 | 10.4 | 134.7 | / | |
| | Stained state | 4.55 | 27.5 | 79.2 | / | |
| **REF 2 (AR)** | Clean state | 0.47 | 14.4 | 260.7 | / | |
| | Stained state | 3.91 | 31.0 | 45.5 | / | |
| **REF 3 (mirror)** | Clean state | 8.87 | 32.3 | 252 | / | |
| | Stained state | 3.50 | 55.4 | 299 | / | |
| **Ex 1 (mirror)** | Clean state | **5.9** | **30.7** | **290** | 4 | 87.97 |
| | Stained state | **5.4** | **33.5** | **292** | 10 | 88.35 |
| **Ex 2 (AR)** | Clean state | **2.3** | **70.9** | **308** | / | 94.62 |
| | Stained state | **2.3** | **68.2** | **310** | / | 94.76 |
| **Ex 3 (AR)** | Clean state | **2.1** | **9.4** | **93** | 8.9 | 95.17 |
| | Stained state | **2.6** | **9.2** | **87** | 9.2 | 94.75 |
| **Ex 4 (AR)** | Clean state | **2.5** | **18.7** | **305** | **3.2** | 94.48 |
| | Stained state | **2.4** | **15.8** | **310** | **4.8** | 94.57 |
| **Ex 5 (AR)** | Clean state | **1.76** | **46.1** | **306** | / | 95.63 |
| | Stained state | **1.94** | **45.3** | **316** | / | 95.73 |
| **Ex 6 (AR)** | Clean state | **1.49** | **39.2** | **303** | / | 96.13 |
| | Stained state | **2.03** | **40.4** | **323** | / | 95.93 |
| **Ex 7 (AR)** | Clean state | **1.49** | **39.3** | **306** | / | 96.13 |
| | Stained state | **1.96** | **39.1** | **322** | / | 96.02 |
| **Ex 8 (mirror)** | Clean state | **3.95** | **4.15** | **190** | / | 91.67 |
| | Stained state | **4.75** | **5.14** | **150** | / | 90.89 |

*Table 3*

| | Stained state/clean state Δ | | | | | | | | |
|---|---|---|---|---|---|---|---|---|---|
| | **ΔRv @15° (%)** | **ΔC* @15°** | **Δh* @15°** | **ΔRuv @35° (%)** | $\Delta E_{ab}$ | **ΔL*** | **ΔS*uv** | **ΔHab** | **ΔTvD65** |
| **REF 1** | 3.8 | 17.1 | -55.5 | / | 31.5 | -17.93 | -0.13 | 15.8 | - |
| **REF 2** | 3.4 | 16.6 | -215.2 | / | 47.0 | -17.78 | 0.04 | 40.2 | - |
| **REF 3** | -5.4 | 23.1 | 47 | / | 42.7 | 12.46 | -1.12 | 33.7 | - |
| **Ex 1** | -0.5 | 2.8 | 2.0 | 6 | 3.1 | 1.09 | -0.14 | 0.8 | 0.38 |
| **Ex 2** | 0 | -2.7 | 2.0 | / | 3.7 | 1.10 | 0.07 | 2.3 | 0.14 |
| **Ex 3** | 0.5 | -0.2 | -6.0 | 0.3 | 2.7 | -2.62 | 0.04 | 0.7 | -0.42 |
| **Ex 4** | -0.1 | -2.9 | 5.0 | 1.6 | 3.5 | 0.48 | 0.17 | 1.8 | 0.09 |
| **Ex 5** | 0.2 | -0.8 | 10 | / | 8.2 | -0.10 | 0.24 | 8.2 | 0.10 |
| **Ex 6** | 0.5 | 1.2 | 20 | / | 14.4 | -2.14 | 0.38 | 14.2 | -0.20 |
| **Ex 7** | 0.5 | -0.2 | 16 | / | 11.4 | -1.84 | 0.36 | 11.3 | -0.11 |
| **Ex 8** | 0.8 | 1.0 | -40 | / | 4.2 | -2.54 | 0.00 | 3.1 | -0.78 |

*Table 4*

It can be observed from these Tables 3 and 4 that for lenes of reference (i.e.: Ref. 1 to Ref.3), the addition of a thin film of oil has an important impact on the interferential system with change in Rv between 3.8% and 5.4%, in chroma higher than 15 and in hue angle from 47° to 215.2°. It results in a high color difference between the clean part and the "dirty" part of the tested lens.

At the opposite, the lenses according to the invention and comprising the combination of a specific IF coating coated directly with the oleophilic layer, it is possible to reduce the color change with absolute Rv change lower or equal to 0.5, absolute chroma change lower than 3 and absolute hue angle change for most lenses lower or equal to 10° (40° for example 8). These colorimetric characteristics lead to a reduction of the ΔEab between the clean state and the stain state below 15 while for reference lenses it is in general higher than 30.

Example 1 and 8 and Ref. 3 include an IF coating having mirror characteristics (Rv > 2.5%), while the other illustrated lenses include an IF coating having antireflective (AR) characteristics with Rv is lower than or equal to 2.5% at an angle of incidence of 15°.

The Applicant has determined that it is quite complex to achieve low Rv that meets the expectation of premium AR coating (<1%). The best results have been obtained for examples 5, 6 and 7 with a Rv lower than 2%. However, it has been possible to achieve coating with reduced color change in reflection when a thin film of oil is deposited.

In addition, it is more difficult to obtain a lens having both a low Rv and a low Ruv. Here, example 4 exhibits low color change, a low UV reflection at 35° with Ruv of 3.2% in the clean state of 4.8% in the stained state which lead to an ESPF of 25, while having a low Rv (2.5% in the clean state and 2.4% in the stained state).

Moreover, examples 2, 3, 4, 5, 6, 7 and 8 also display a structure with a high LI/HI ratio. Also, examples 3 to 8 present structures as the ones disclosed in EP 3 654 071 showing higher abrasion resistance, better adherence and similar or improved critical temperatures than classical interferential coatings with:

- a tri layer HI/LI/HI and more specifically $ZrO_2/SiO_2/ZrO_2$ (named L1 to L3) deposited on the substrate ;
- a compressive thick silica layer deposited on the adhesion tri-layer;
- and the IF structure.

Example 7 is realized using $Ta_2O_5$ as high index material for forming some of the HI layer. Examples 3-6 and 8 are realized not using any $Ta_2O_5$ as high index material.

## Claims

**1.** An optical article comprising at least:

(a) a base element having a front main surface and a rear main surface,
(b) at least a multilayered interferential coating, defined as IF coating, deposited onto the front main surface and/or the rear main surface of said base element, said IF coating comprising at least two layers having a low refractive index which is lower than 1.55, defined as "LI layer", and at least two layers having a high refractive index which is equal to or higher than 1.55, defined as "HI layer", and
(c) an oleophilic outer layer, in contact with air, which has a thickness of 10 nm or less and has a contact angle with oleic acid lower than or equal to 40°, said oleophilic outer layer is adapted and/or configured to not amend the optical and colorimetric characteristics of said optical article,

**characterized in that** said optical article has a mean light reflection factor in the visible region when it is deprived from any greasy deposits, defined as $R_{v(clean)}$ and has a mean light reflection factor in the visible region when it is, at least in part, stained by any greasy deposits, defined as $R_{v(stained)}$, said greasy deposits forming onto the oleophilic outer layer an oily film having a thickness higher than or equal to 90 nm and having a refractive index in the range from 1.3 to 1.55, such as $\Delta Rv = |R_{v(clean)} - R_{v(stained)}| \leq 2\%$,

wherein the refractive indexes being expressed at 25°C at a wavelength of 550 nm,
and wherein the mean light reflection factors in the visible region $R_v$ are defined in the ISO 13666:1998 Standard and are measured in accordance with the ISO 8980-4 for an angle of incidence of 15°.

**2.** The optical article according to claim 1, wherein $\Delta R_v \leq 1\%$, in particular $\leq 0.9\%$, preferably $\leq 0.8\%$ and typically $\leq 0.5\%$.

**3.** The optical article according to claim 1 or 2, wherein said optical article has a mean reflection factor in the UV region when it is deprived from the greasy deposits, defined as $R_{uv(clean)}$ and has a mean reflection factor in the UV region when it is stained by the greasy deposits, defined as $R_{uv(stained)}$, such as $\Delta R_{uv} = |R_{uv(clean)} - R_{uv(stained)}| \leq 7\%$, in

particular ≤ 6% and typically ≤ 2%,
wherein the mean reflection factors in the UV region, weighted by the function W(λ), are defined in the ISO 13666:1998 Standard for an angle of incidence of 35°and for all wavelengths ranging from 280 nm to 380 nm.

**4.** The optical article according to any one of the preceding claims, wherein $R_{uv(clean)}$ and/or $R_{uv(stained)}$ as defined in claim 3 is lower than or equal to 10, preferably ≤ 9.5, in particular ≤ 8.0% and typically ≤ 5%.

**5.** The optical article according to any one of the preceding claims, wherein the IF coating has a ratio $R_T$ defined as

$$\mathrm{RT} = \frac{sum\ of\ the\ physical\ thicknesses\ of\ the\ LI\ layers\ in\ the\ IF\ coating}{sum\ of\ the\ physical\ thicknesses\ of\ the\ HI\ layers\ in\ the\ IF\ coating}$$

which is higher than or equal to 1.5, preferably higher than or equal to 1.9 and especially higher than or equal to 2.0.

**6.** The optical article according to any one of the preceding claims, wherein said optical article has a Chroma when it is deprived from the greasy deposits, defined as $C^*_{(clean)}$ and has a Chroma when it is stained by the greasy deposits, defined as $C^*_{(stained)}$, such as $\Delta C^* = | C^*_{(clean)} - C^*_{(stained)}| \leq 5$, especially ≤ 4 and typically ≤ 3,
wherein the Chroma C* values are defined in the international colorimetric CIE L*a*b* (1976) taking the standard illuminant D65 into account for an angle of incidence of 15°.

**7.** The optical article according to any one of the preceding claims, wherein said optical article has a hue when it is deprived from the greasy deposits, defined as $h_{(clean)}$ and has a hue when it is stained by the greasy deposits, defined as $h_{(stained)}$, such as $\Delta h = |h_{(clean)} - h_{(stained)}| \leq 45°$, especially ≤ 20° and typically ≤ 10°,
wherein the hue values are defined in the international colorimetric CIE L*a*b* (1976) taking the standard illuminant D65 into account for an angle of incidence of 15°.

**8.** The optical article according to any one of the preceding claims, wherein the optical article has a first color difference, noted $\Delta E^*_{ab}$ corresponding to:

$$\Delta E^*_{ab} = \sqrt{\left(L^*_{stained} - L^*_{clean}\right)^2 + \left(a^*_{stained} - a^*_{clean}\right)^2 + \left(b^*_{stained} - b^*_{clean}\right)^2}$$

wherein

$L^*_{clean}$, $a^*_{clean}$, $b^*_{clean}$ are the ****theoretical**** values of L*, a*, b* of the optical article when it is deprived from the greasy deposits;
$L^*_{stained}$, $a^*_{stained}$, $b^*_{stained}$ are the ****theoretical**** values of L*, a*, b* of the optical article when it is stained from the greasy deposits,
said L*, a* and b* values being defined according to the international colorimetric CIE L*a*b* for an incident angle of 15°, taking the standard illuminant D65 into account,
wherein said $\Delta E^*_{ab}$ is lower than or equal to 20, preferably lower than or equal to 15 and typically lower than or equal to 10.

**9.** The optical article according to any one of the preceding claims, wherein the optical article has a second color difference, noted $\Delta H^*_{ab}$ corresponding to:

$$\Delta H_{ab} = \sqrt{\left(a^*_{stained} - a^*_{clean}\right)^2 + \left(b^*_{stained} - b^*_{clean}\right)^2 - \left(C^*_{stained} - C^*_{clean}\right)^2}$$

$C^*_{clean}$, $a^*_{clean}$, $b^*_{clean}$ are the ****theoretical**** values of C*, a*, b* of the optical article when it is deprived from the greasy deposits;
$C^*_{stained}$, $a^*_{stained}$, $b^*_{stained}$ are the ****theoretical**** values of L*, a*, b* of the optical article when it is stained from the greasy deposits,
said L*, a* and b* values being defined according to the international colorimetric CIE L*a*b* for an incident angle of 15°, taking the standard illuminant D65 into account,

wherein said $\Delta H^*_{ab}$ is lower than or equal to 20, preferably lower than or equal to 15 and typically lower than or equal to 10.

**10.** The optical article according to any one of the preceding claims, wherein $R_{v(clean)}$ and $R_{v(stained)} \leq 2.5\%$.

**11.** The optical article according to any one of the preceding claims 1 to 9, wherein $R_{v(clean)}$ and $R_{v(stained)}$) > 2.5 %.

**12.** The optical article according to any one of the preceding claims, having a transmission factor in the visible, in a clean state, defined as $T_{v(clean)}$ and has a transmission factor in the visible, in the stained state, defined as $T_{v\,(stained)}$, such as $\Delta T_v = |T_{v\,(clean)} - T_{v\,(stained)}| \leq 1\ \%$, the factor $T_V$ should be understood as defined by the international normalized definition (ISO 13666:1998 Standard) and is measured in accordance with the ISO 8980-3 Standard. It is defined in the wavelength range of from 380 to 780 nm.

**13.** The optical article according to any one of the preceding claims, wherein the innermost layer is a HI layer having a thickness lower than or equal to 60 nm, preferably lower than or equal to 55 nm, in particular lower than or equal to 50 nm and typically ranges from 8 to 45 nm.

**14.** The optical article according to any one of the preceding claims, wherein the second LI layer the closest from the substrate has a thickness higher than or equal to 100 nm, preferably higher than or equal to 110 nm, in particular higher than or equal to 120 nm and typically higher than or equal to 130 nm, such as ranges from 100 to 180 nm.

**15.** Method of designing an optical article as defined in any one of the preceding claims, defined as "the final optical article" comprising at least the following successive steps:

(i) defining a starting optical article comprising at least:

(a) optionally a base element having a front main surface and a rear main surface as defined in any one of the preceding claims,
(b) a starting multilayered interferential coating, defined as starting IF coating, intended to be deposited onto the front main surface and/or the rear main surface of said base element, said IF coating comprising:

a predetermined number of LI and HI layers, said predetermined number of HI and LI layers comprising at least two LI layers and at least two HI layers,
a predetermined material for each HI layer and each LI layer;
a predetermined thickness range between a minimum thickness and a maximum thickness for each HI layer and each LI layer; and

(c) optionally the oleophilic outer layer such as defined in claim 1;

(ii) defining target optical and preferably color characteristics comprising the mean reflection factor in the visible region Rv and optionally one or more of the following characteristics: the mean reflection factor in the UV region, the transmission, the hue, the Chroma, between a clean state wherein the starting optical article is deprived from any greasy deposits and a stained state wherein the starting optical article is stained by any greasy deposits, said greasy deposits forming onto the oleophilic outer layer, an oily film corresponding to an oily layer having a thickness of 150 nm and having a refractive index of 1.45 at 550nm; the mean light reflection factor in the visible region in the clean state is defined as as $R_{v(clean)}$ and the mean light reflection factor in the visible region in the stained state is defined as $R_{v(stained)}$ ;
(iii) performing an optimization procedure by varying the thickness of the HI layers and the LI layers of the starting optical article so as to reduce the reflection change between the clean state and the stained state and to obtain a final optical article having $\Delta Rv = |R_{v(clean)} - R_{v(stained)}| \leq 2\%$ and optionally so as to reduce one or more of the following changes: the mean reflection factor in the visible region UV change "$\Delta R_{uv}$", between the clean state and the stained state and to obtain the final optical article having, such as $\Delta R_{uv} = |R_{uv(clean)} - R_{uv(stained)}| \leq 7\%$, the transmission change ""$\Delta T_v$" between the clean state and the stained state, and to obtain the final optical article having $\Delta Tv = |T_{v(clean)} - T_{v(stained)}| \leq 2\%$, %, the chroma change "$\Delta C^*$" between the clean state and the stained state, and to obtain the final optical article having such as $\Delta C^* = |C^*_{(clean)} - C^*_{(stained)}| \leq 5$ and the hue change "$\Delta h$" between the clean state and the stained state and to obtain the final optical article having such as $\Delta h = |h_{(clean)} - h_{(stained)}| \leq 45°$..

**FIG.1**

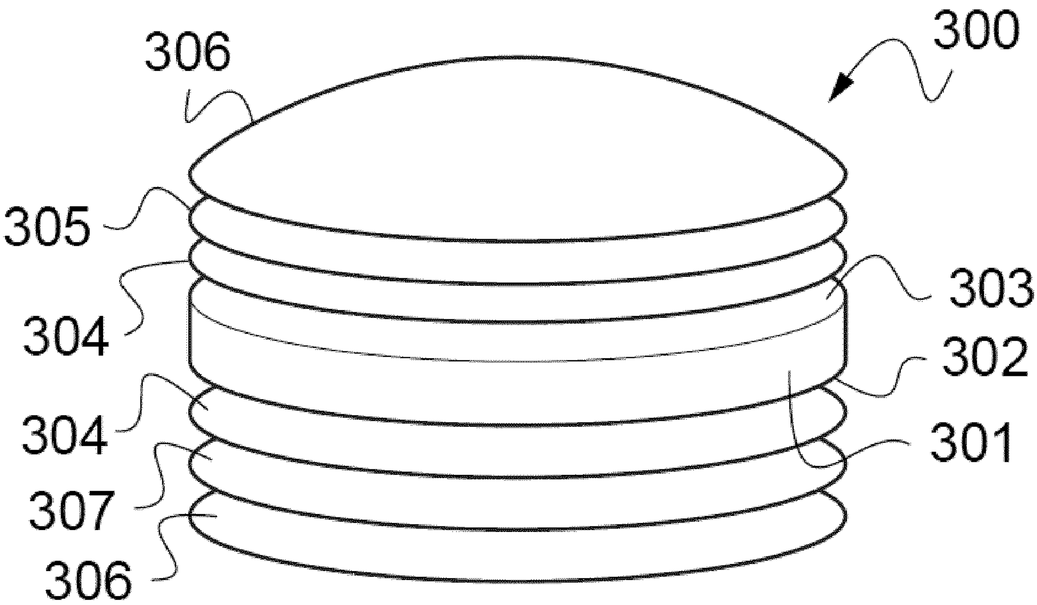

Europäisches Patentamt
European Patent Office
Office européen des brevets

# EUROPEAN SEARCH REPORT

Application Number
EP 24 30 6054

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | KHODIER S A ED - ASARI VIJAYAN K ET AL: "Refractive index of standard oils as a function of wavelength and temperature", OPTICS AND LASER TECHNOLOGY, ELSEVIER SCIENCE PUBLISHERS BV., AMSTERDAM, NL, vol. 34, no. 2, 1 March 2002 (2002-03-01), pages 125-128, XP004340359, ISSN: 0030-3992, DOI: 10.1016/S0030-3992(01)00101-3<br>* page 127; table 1 *<br>----- | 1-15 | INV.<br>G02B1/18 |
| X | US 2007/178301 A1 (CAMELIO SOPHIE [FR] ET AL) 2 August 2007 (2007-08-02)<br>* paragraph [0234] - paragraph [0235]; figure 1 *<br>----- | 1-14 | |
| A | EP 3 640 688 A1 (ESSILOR INT [FR]) 22 April 2020 (2020-04-22)<br>* paragraph [0056] - paragraph [0058] *<br>----- | 1-15 | |
| A | JP 2009 122416 A (TOPPAN PRINTING CO LTD) 4 June 2009 (2009-06-04)<br>* claim 1 *<br>* example 1 *<br>----- | 1-15 | TECHNICAL FIELDS SEARCHED (IPC)<br>G02B |
| A,D | US 2020/283458 A1 (SAKOH RYUSUKE [JP] ET AL) 10 September 2020 (2020-09-10)<br>* claim 1 *<br>* paragraph [0080] - paragraph [0086] *<br>----- | 1-15 | |
| A | US 2017/199307 A1 (HART SHANDON DEE [US] ET AL) 13 July 2017 (2017-07-13)<br>* paragraph [0123] - paragraph [0127] *<br>* claim 15 *<br>----- | 1-15 | |

The present search report has been drawn up for all claims

3

| Place of search | Date of completion of the search | Examiner |
|---|---|---|
| Munich | 4 November 2024 | Le Masson, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 30 6054

This annex lists the patent family members relating to the patent documents cited in the above-mentioned European search report. The members are as contained in the European Patent Office EDP file on
The European Patent Office is in no way liable for these particulars which are merely given for the purpose of information.

04-11-2024

| Patent document cited in search report | Publication date | Patent family member(s) | Publication date |
|---|---|---|---|
| US 2007178301 A1 | 02-08-2007 | EP 1856563 A1 | 21-11-2007 |
| | | FR 2882443 A1 | 25-08-2006 |
| | | JP 2008532792 A | 21-08-2008 |
| | | US 2007178301 A1 | 02-08-2007 |
| | | WO 2006087502 A1 | 24-08-2006 |
| EP 3640688 A1 | 22-04-2020 | CN 112867945 A | 28-05-2021 |
| | | EP 3640688 A1 | 22-04-2020 |
| | | US 2021397025 A1 | 23-12-2021 |
| | | WO 2020079197 A1 | 23-04-2020 |
| JP 2009122416 A | 04-06-2009 | NONE | |
| US 2020283458 A1 | 10-09-2020 | CN 111263765 A | 09-06-2020 |
| | | JP 6996568 B2 | 17-01-2022 |
| | | JP WO2019082583 A1 | 17-12-2020 |
| | | KR 20200074113 A | 24-06-2020 |
| | | TW 201927797 A | 16-07-2019 |
| | | US 2020283458 A1 | 10-09-2020 |
| | | WO 2019082583 A1 | 02-05-2019 |
| US 2017199307 A1 | 13-07-2017 | CN 106537190 A | 22-03-2017 |
| | | EP 3146368 A1 | 29-03-2017 |
| | | JP 6746502 B2 | 26-08-2020 |
| | | JP 7096858 B2 | 06-07-2022 |
| | | JP 2017518529 A | 06-07-2017 |
| | | JP 2020126278 A | 20-08-2020 |
| | | JP 2022123136 A | 23-08-2022 |
| | | KR 20170012391 A | 02-02-2017 |
| | | KR 20220084430 A | 21-06-2022 |
| | | TW 201602624 A | 16-01-2016 |
| | | US 2017199307 A1 | 13-07-2017 |
| | | US 2020217990 A1 | 09-07-2020 |
| | | US 2023091466 A1 | 23-03-2023 |
| | | WO 2015179739 A1 | 26-11-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4410563 A
- EP 0203730 A
- EP 749021 A
- EP 844265 A
- EP 933377 A
- US 4070097 A
- WO 0031569 A
- WO 2012076714 A
- EP 3255108 A
- WO 2020026729 A
- FR 2702486
- EP 0614957 A
- US 4211823 A
- US 5015523 A
- JP 63141001 A
- JP 63087223 A
- EP 0404111 A
- US 5316791 A
- EP 0680492 A
- EP 3654071 A


### Non-patent literature cited in the description


- Optics & Laser Technology. Elsevier, 2002, vol. 34, 125-128
- **OWENS D. K** ; **WENDT R. G**. Estimation of the surface force energy of polymers. *J. APPL. POLYM.SCI*, 1969, vol. 13, 1741-1747
- **M. GRISHKE**. *Diamond and related materials*, 1998, vol. 7, 454-458
- **J. ROBERTSON**. Diamond-like amorphous carbon. *Materials science and engineering*, 2002, vol. R37, 129-181
- Thin Film Processes II. Thin Film Processes. Academic Press, 1978